(19) Europäisches Patentamt / European Patent Office / Office européen des brevets

(11) **EP 4 334 758 B1**

(12) **EUROPEAN PATENT SPECIFICATION**

(45) Date of publication and mention
of the grant of the patent:
**20.08.2025 Bulletin 2025/34**

(21) Application number: **22716668.3**

(22) Date of filing: **24.03.2022**

(51) International Patent Classification (IPC):
**G01V 1/30** *(2006.01)*    **G01V 1/34** *(2006.01)*

(52) Cooperative Patent Classification (CPC):
**G01V 1/301; G01V 1/306; G01V 1/345;**
G01V 2210/64

(86) International application number:
**PCT/US2022/021711**

(87) International publication number:
**WO 2022/235345 (10.11.2022 Gazette 2022/45)**

(54) **MULTI-TASK NEURAL NETWORK FOR SALT MODEL BUILDING**

NEURONALES MULTITASK-NETZWERK ZUM AUFBAU EINES SALZMODELLS

RÉSEAU NEURONAL MULTITÂCHE POUR LA CONSTRUCTION D'UN MODÈLE DE SEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.05.2021 US 202163201619 P**

(43) Date of publication of application:
**13.03.2024 Bulletin 2024/11**

(73) Proprietor: **ExxonMobil Technology and
Engineering Company
Spring, TX 77389 (US)**

(72) Inventor: **YE, Ruichao
Spring, TX 77389 (US)**

(74) Representative: **ExxonMobil Petroleum &
Chemical BV
IP Law Europe
Hermeslaan 2
1831 Machelen (BE)**

(56) References cited:
CN-A- 109 799 533      US-A1- 2019 064 378
US-A1- 2020 183 047

• WANG DETAO ET AL: "Seismic Stratum
Segmentation Using an Encoder-Decoder
Convolutional Neural Network", MATHEMATICAL
GEOSCIENCES, SPRINGER BERLIN
HEIDELBERG, BERLIN/HEIDELBERG, vol. 53,
no. 6, 12 February 2021 (2021-02-12), pages 1355
- 1374, XP037546612, ISSN: 1874-8961, [retrieved
on 20210212], DOI: 10.1007/S11004-020-09916-8
• YE RUICHAO ET AL: "Multi-channel
convolutional neural network workflow for
automatic salt interpretation", SEG TECHNICAL
PROGRAM EXPANDED ABSTRACTS 2019, 10
August 2019 (2019-08-10), pages 2428 - 2432,
XP055927683, DOI: 10.1190/
segam2019-3216596.1
• QI JIE ET AL: "Seismic attribute selection for
machine-learning-based facies analysis",
GEOPHYSICS, vol. 85, no. 2, 1 March 2020
(2020-03-01), US, pages O17 - O35, XP055927883,
ISSN: 0016-8033, DOI: 10.1190/geo2019-0223.1

**Description**

CROSS-REFERENCE TO RELATED APPLICATION

This application claims priority to and the benefit of U.S. Provisional Application No. 63/201,619 having a filing date of May 6, 2021.

FIELD OF THE INVENTION

The present application relates generally to the field of hydrocarbon production. Specifically, the disclosure relates to a methodology for salt model building in order to detect subsurface hydrocarbon presence and geological features.

BACKGROUND OF THE INVENTION

This section is intended to introduce various aspects of the art, which may be associated with exemplary embodiments of the present disclosure. This discussion is believed to assist in providing a framework to facilitate a better understanding of particular aspects of the present disclosure. Accordingly, it should be understood that this section should be read in this light, and not necessarily as admissions of prior art.

One step of hydrocarbon prospecting is to accurately model subsurface geologic structures and detect fluid presence in those structures. For example, a geologic model may comprise a computer-based representation, such as a two-dimensional ("2D") representation or a three-dimensional ("3D") representation, of a region beneath the earth's surface. Such models may be used to model a petroleum reservoir, a depositional basin, or other regions which may have valuable mineral resources. Once the model is constructed, it may be used for various purposes, many of which are intended to facilitate efficient and economical recovery of the valuable resources. For example, the geologic model may be used for hydrocarbon management, such as an input to simulations of petroleum reservoir fluid flows during production operations, which are used to plan well placements and predict hydrocarbon production from a petroleum reservoir over time.

One type of model comprises a velocity model for a subsurface region. The subsurface region may be composed of multiple layers, such as multiple layers of rock created from different materials or under different conditions. The multiple layers of rock may have different properties, with the velocity model mapping out the layers of rock in subsurface region and the expected speed that seismic waves (e.g., P-waves, S-waves, including anisotropic effects) may travel in the multiple layers. In this regard, the velocity model may be one way in which to characterize the subsurface, including the multiple layers in the subsurface.

Examples of materials in the layers in the subsurface include salt and sediment interactions, which may cause reservoir traps and hydrocarbon traps, and which may be beneficial to energy exploration. However, imaging salt in the subsurface may be challenging. Salt may be associated with strong diffraction and poor focused image, thereby making it difficult to interpret sediments underneath salt body or near salt flanks. In particular, one focus is to improve the image quality of surrounding sediments, thereby making the seismic migration image more focused and easier to identify geological structures. However, the salt body may cause strong diffraction that scatters away the energy that should illuminate the target sediment, or causes multiples that makes "fake structures". A salt body with the wrong shape may also distort the image of the underneath sediment and make it defocused.

In this regard, salt model building may be one of the most challenging steps in velocity model building for salt-dominated environments. Depending on the data volume and complexity of geological structures, this iterative procedure may take from several months to a year of close interaction between seismic processing and interpretation experts. For example, the salt environment comes with complex structures of various scales, among which the presence of carbonates, anhydrites, volcanic ridges, and deep, thin salt layers demonstrates the main challenges to detecting the correct location of salt boundary. See Rodriguez, C. R., C. A.-L. Jackson, A. Rotevatn, R. E. Bell, and M. Francis, "Dual tectonic-climatic controls on salt giant deposition in the Santos Basin, offshore Brazil", Geosphere (Geological Society of America) 14: 215-242. https://pubs.geoscienceworld.org/gsa/geosphere/article/14/1/215/525934/Dual-tectonic-climatic-controls-on-salt-giant (2018). In the presence of overhangs, a typical workflow for salt model building includes sediment-flooding, picking first top of salt (TOS), salt-flooding, picking first bottom of salt (BOS), and then repeating for the second TOS and BOS interpretation. Human interpretation is usually 2D-line based, relying on auto-tracking tools to pick desired peaks, troughs, or zero-crossings as salt boundary horizons. For a large 3D survey with widespread phase discontinuities, human picking is labor intensive, time consuming, and ergonomically challenging.

Recently, being viewed as an object detection problem, salt model building has benefited from the latest developments of Deep Neural Networks (DNN), which have been widely recognized as a powerful engine for solving analogous tasks in computer vision. A well-studied architecture for image segmentation is U-net, which shows promising results in both synthetic and field cases. See Gramstad, Oddgeir, and Michael Nickel, "Automated interpretation of top and base salt using deep convolutional networks", SEG Technical Program Expanded Abstracts 2018, 1956-1960. Society of Exploration Geophysicists. https://library.seg.org/doi/10.1190/segam2018-2996306.1 (2018); Waldeland, Anders U., Are Charles Jensen, Leiv-J. Gelius, and Anne H. Schistad Solberg, "Convolutional neural networks for automated seismic interpretation", The Leading Edge (Society of Exploration Geophysicists Tulsa, Oklahoma) 37: 529-537. https://library. seg.org/doi/10.1190/tle37070529.1 (2018).

Wang, Detao and Guoxiong Chen, "Seismic Stratum Segmentation Using an Encoder-Decoder Convolutional Neural Network", Mathematical Geociences, 53: 1355 - 1374. https://doi.org/10.1007/ s11004-020-09916-8 (2021) dicloses training based on an input value being mapped to a single value. The data on which training is done does include different values, but these are indicating different materials present at different locations, so associated with different input values.

SUMMARY OF THE INVENTION

In this invention, a computer-implemented method for performing machine learning to generate and use a salt feature model for detecting subsurface hydrocarbon presence and geological features according to claim 1 is disclosed. The method includes:

accessing input values and corresponding output values for a salt feature label and at least another feature label; performing machine learning to train the salt feature model using the input values and the output values, the machine learning including mapping the input values to a plurality of target output values, the plurality of target output values comprising a salt feature output and at least another feature output, the salt feature model being trained based on both errors between the salt feature output and the salt feature label and between the at least another feature output and the at least another feature label; and using the salt feature model for hydrocarbon management.

BRIEF DESCRIPTION OF THE DRAWINGS

The present application is further described in the detailed description which follows, in reference to the noted plurality of drawings by way of non-limiting examples of exemplary implementations, in which like reference numerals represent similar parts throughout the several views of the drawings. In this regard, the appended drawings illustrate only exemplary implementations and are therefore not to be considered limiting of scope, for the disclosure may admit to other equally effective embodiments and applications.

FIG. 1 is an example network architecture for training a neural network to generate a salt feature model.
FIG. 2A is a first example flow diagram for training the neural network and using the trained neural network.
FIG. 2B is a second example flow diagram for training and retraining the neural network and using the retrained neural network.
FIG. 3 is a table of the aggregated loss function for different training labels, depending on availability of the training labels.
FIG. 4A is a graph of training and validation loss curves using a standard U-net for training the neural network.
FIG. 4B is a graph of training and validation loss curves using the network architecture in FIG. 1 for training the neural network.
FIG. 5 is an example image with a demarcated area (e.g., manually-selected lines in a polygon area) for use as training data.
FIG. 6 is an example image of labeled data, including a TOS label generated based on partially and sparsely picked horizon with highlighted traces masked due to no human labeling.
FIG. 7A is an image of a prediction result using the disclosed methodology showing 3-channel outputs including salt-mask channel output, TOS channel output, and BOS channel output.
FIG. 7B is an image of a prediction result using the disclosed methodology showing only salt-mask channel output.
FIG. 8 is a diagram of an exemplary computer system that may be utilized to implement the methods described herein.

DETAILED DESCRIPTION OF THE INVENTION

The methods, devices, systems, and other features discussed below may be embodied in a number of different forms. Not all of the depicted components may be required, however, and some implementations may include additional, different, or fewer components from those expressly described in this disclosure. Variations in the arrangement and type of the components may be made without departing from the scope of the claims as set forth herein. Further, variations in the processes described, including the addition, deletion, or rearranging and order of logical operations, may be made without departing from the scope of the claims as set forth herein.

It is also to be understood that the terminology used herein is for the purpose of describing particular embodiments only, and is not intended to be limiting. As used herein, the singular forms "a," "an," and "the" include singular and plural referents unless the content clearly dictates otherwise. Furthermore, the words "can" and "may" are used throughout this application in a permissive sense (i.e., having the potential to, being able to), not in a mandatory sense (i.e., must). The term "include," and derivations thereof, mean "including, but not limited to." The term "coupled" means directly or indirectly connected. The word "exemplary" is used herein to mean "serving as an example, instance, or illustration." Any aspect described herein as "exemplary" is not necessarily to be construed as preferred or advantageous over other aspects. The term "uniform" means substantially equal for each sub-element, within about $\pm 10\%$ variation.

The term "seismic data" as used herein broadly means any data received and/or recorded as part of the seismic surveying and interpretation process, including displacement, velocity and/or acceleration, pressure and/or rotation, wave reflection, and/or refraction data. "Seismic data" is also intended to include any data (e.g., seismic image, migration image, reverse-time migration image, pre-stack image, partially-stack image, full-stack image, post-stack image or seismic attribute image) or interpretation quantities, including geophysical properties such as one or more of: elastic properties (e.g., P and/or S wave velocity, P-Impedance, S-Impedance, density, attenuation, anisotropy and the like); and porosity, permeability or the like, that the ordinarily skilled artisan at the time of this disclosure will recognize may be inferred or otherwise derived from such data received and/or recorded as part of the seismic surveying and interpretation process. Thus, this disclosure may at times refer to "seismic data and/or data derived therefrom," or equivalently simply to "seismic data." Both terms are intended to include both measured/recorded seismic data and such derived data, unless the context clearly indicates that only one or the other is intended. "Seismic data" may also include data derived from traditional seismic (e.g., acoustic) data sets in conjunction with other geophysical data, including, for example, gravity plus seismic; gravity plus electromagnetic plus seismic data, etc. For example, joint-inversion utilizes multiple geophysical data types.

The term "geophysical data" as used herein broadly includes seismic data, as well as other data obtained from non-seismic geophysical methods such as electrical resistivity. In this regard, examples of geophysical data include, but are not limited to, seismic data, gravity surveys, magnetic data, electromagnetic data, well logs, image logs, radar data, or temperature data.

The term "geological features" (interchangeably termed geo-features) as used herein broadly includes attributes associated with a subsurface, such as any one, any combination, or all of: subsurface geological structures (e.g., channels, volcanos, salt bodies, geological bodies, geological layers, etc.); boundaries between subsurface geological structures (e.g., a boundary between geological layers or formations, etc.); or structure details about a subsurface formation (e.g., subsurface horizons, subsurface faults, mineral deposits, bright spots, salt welds, distributions or proportions of geological features (e.g., lithotype proportions, facies relationships, distribution of petrophysical properties within a defined depositional facies), etc.). In this regard, geological features may include one or more subsurface features, such as subsurface fluid features, that may be hydrocarbon indicators (e.g., Direct Hydrocarbon Indicator (DHI)). Examples of geological features include, without limitation salt, fault, channel, environment of deposition (EoD), facies, carbonate, rock types (e.g., sand and shale), horizon, stratigraphy, or geological time, and are disclosed in US Patent Application Publication No. 2010/0186950 A1.

The terms "velocity model," "density model," "physical property model," or other similar terms as used herein refer to a numerical representation of parameters for subsurface regions. Generally, the numerical representation includes an array of numbers, typically a 2-D or 3-D array, where each number, which may be called a "model parameter," is a value of velocity, density, or another physical property in a cell, where a subsurface region has been conceptually divided into discrete cells for computational purposes. For example, the spatial distribution of velocity may be modeled using constant-velocity units (layers) through which ray paths obeying Snell's law can be traced. A 3-D geologic model (particularly a model represented in image form) may be represented in volume elements (voxels), in a similar way that a photograph (or 2-D geologic model) may be represented by picture elements (pixels). Such numerical representations may be shape-based or functional forms in addition to, or in lieu of, cell-based numerical representations.

The term "subsurface model" as used herein refer to a numerical, spatial representation of a specified region or properties in the subsurface.

The term "geologic model" as used herein refer to a subsurface model that is aligned with specified geological feature such as faults and specified horizons.

The term "reservoir model" as used herein refer to a geologic model where a plurality of locations have assigned properties including any one, any combination, or all of rock type, EoD, subtypes of EoD (sub-EoD), porosity, clay volume, permeability, fluid saturations, etc.

For the purpose of the present disclosure, subsurface model, geologic model, and reservoir model are used interchangeably unless denoted otherwise.

Stratigraphic model is a spatial representation of the sequences of sediment, formations and rocks (rock types) in the subsurface. Stratigraphic model may also describe the depositional time or age of formations.

Structural model or framework results from structural analysis of reservoir or geobody based on the interpretation of 2D or 3D seismic images. For examples, the reservoir framework comprises horizons, faults and surfaces inferred from seismic at a reservoir section.

As used herein, "hydrocarbon management" or "managing hydrocarbons" includes any one, any combination, or all of the following: hydrocarbon extraction; hydrocarbon production, (e.g., drilling a well and prospecting for, and/or producing, hydrocarbons using the well; and/or, causing a well to be drilled, e.g., to prospect for hydrocarbons); hydrocarbon exploration; identifying potential hydrocarbon-bearing formations; characterizing hydrocarbon-bearing formations; identifying well locations; determining well injection rates; determining well extraction rates; identifying reservoir connectivity; acquiring, disposing of, and/or abandoning hydrocarbon resources; reviewing prior hydrocarbon management decisions; and any other hydrocarbon-related acts or activities, such activities typically taking place with respect to a subsurface formation. The aforementioned broadly include not only the acts themselves (e.g., extraction, production, drilling a well, etc.), but also or instead the direction and/or causation of such acts (e.g., causing hydrocarbons to be extracted, causing hydrocarbons to be produced, causing a well to be drilled, causing the prospecting of hydrocarbons, etc.). Hydrocarbon management may include reservoir surveillance and/or geophysical optimization. For example, reservoir surveillance data may include, well production rates (how much water, oil, or gas is extracted over time), well injection rates (how much water or carbon dioxide ($CO_2$) is injected over time), well pressure history, and time-lapse geophysical data. As another example, geophysical optimization may include a variety of methods geared to find an optimum model (and/or a series of models which orbit the optimum model) that is consistent with observed/measured geophysical data and geologic experience, process, and/or observation.

As used herein, "obtaining" data generally refers to any method or combination of methods of acquiring, collecting, or accessing data, including, for example, directly measuring or sensing a physical property, receiving transmitted data, selecting data from a group of physical sensors, identifying data in a data record, and retrieving data from one or more data libraries.

As used herein, terms such as "continual" and "continuous" generally refer to processes which occur repeatedly over time independent of an external trigger to instigate subsequent repetitions. In some instances, continual processes may repeat in real time, having minimal periods of inactivity between repetitions. In some instances, periods of inactivity may be inherent in the continual process.

As discussed in the background, salt model building may be one of the most challenging steps in velocity model building for salt-dominated environments. As merely one example, training data (e.g., covering the desired feature space for target datasets) may be limited. Nevertheless, specific types of neural networks, such as state-of-the-art architecture Deep Neural Network (DNN), also known as a Feed Forward Neural Networks, with advanced training strategy may mitigate overfitting and allow generalization in various datasets even if limited. Further, a carefully designed workflow may enhance prediction quality from existing DNN architectures.

In particular, techniques such as residual networks (see, e.g., Sen, Satyakee, Sribharath Kainkaryam, Cen Ong, and Arvind Sharma, "Regularization strategies for deep-learning-based salt model building", Interpretation (Society of Exploration Geophysicists and American Association of Petroleum) 7: T911-T922. https://library.seg.org/doi/10.1190/INT-2018-0229.1 (2019); Zeng, Yu, Kebei Jiang, and Jie Chen, "Automatic seismic salt interpretation with deep convolutional neural networks", Proceedings of the 2019 3rd International Conference on Information System and Data Mining. 16-20. https://arxiv.org/abs/1812.01101 (2019)), skip connections (Shi, Yunzhi, Xinming Wu, and Sergey Fomel, "SaltSeg: Automatic 3D salt segmentation using a deep convolutional neural network", Interpretation (Society of Exploration Geophysicists and American Association of Petroleum) 7: SE113-SE122. https://library.seg.org/doi/10.1190/INT-2018-0235.1 (2019)) and drop-out layers (Zhao, Tao, and Xiaoli Chen, "Enrich the interpretation of seismic image segmentation by estimating epistemic uncertainty", SEG Technical Program Expanded Abstracts 2020, 1444-1448. Society of Exploration Geophysicists. https://library.seg.org/doi/abs/10.1190/segam2020-3424987.1 (2020)), and other carefully adjusted network components such as activation functions (Zhou, Hongbo, Sheng Xu, Gentiana Ionescu, Marin Laomana, and Nathan Weber, "Salt interpretation with U-SaltNet." SEG Technical Program Expanded Abstracts 2020, 1434-1438. Society of Exploration Geophysicists. https://library.seg.org/doi/10.1190/segam2020-3423283.1 (2020)) may mitigate the over-predicting problem.

Moreover, given a well-constructed neural network, techniques like ensemble prediction (Sen, Kainkaryam, et al. 2019) or semi-supervised learning (Sen, Kainkaryam, et al. 2020) may significantly improve the generality and accuracy of prediction, especially in the absence of sufficient quality labels. Meanwhile, generating an uncertainty map which, although not guaranteeing a more accurate prediction, may add value in practical applications by highlighting regions where DNN prediction results may be unreliable (Zhao and Chen 2020). Integrating DNN with full-waveform inversion (FWI), or another inversion algorithm, may also be an effective way to mitigate inaccuracies in DNN predictions (see Li, Hongyan, Jarrod Hutson, Brian Weir, Chuck Peng, and Betty Koechner, "Statistical inversion of variable salt velocity by neural network classification in the central Gulf of Mexico", SEG Technical Program Expanded Abstracts 2016, 5323-5327. Society of Exploration Geophysicists. https://library.seg.org/doi/10.1190/segam2016-13969828.1 (2016); Lewis, Winston, and Denes Vigh, "Deep learning prior models from seismic images for full-waveform inversion", SEG Technical Program Expanded Abstracts 2017, 1512-1517. Society of Exploration Geophysicists. https://library.seg.org/doi/abs/10.1190/segam2017-17627643.1 (2017); Wu, Yulang, and George A. McMechan, "Feature-capturing full waveform inversion using a convolutional neural network", SEG Technical Program Expanded Abstracts 2018, 2061-2065. Society of Exploration Geophysicists. https://library.seg.org/doi/abs/10.1190/segam2018-2963265.1 (2018)).

In order to overcome any one, any combination, or all of the deficiencies in the art, a methodology is disclosed that trains, in combination, multiple aspects related to the subsurface, one of which is the target salt feature, in order to generate a salt feature model (e.g., the construct that models the desired salt feature). In the invention, the multiple aspects include the target salt feature (such as the predicted salt mask) and at least one other feature, such as one or more other salt features (e.g., any one, any combination, or all of TOS, BOS, or overhang) and/or one or more subsurface features (e.g., reconstruction of the input image; P-wave velocity; etc.).

In practice, the methodology accesses input values (e.g., seismic data, such as seismic images) and corresponding output values for the multiple aspects related to the subsurface (e.g., labels for the target salt feature, such as the salt mask label, and for other features, such as any one, any combination, or all of the TOS label, BOS label, overhang label, P-wave velocity label, etc.) in order to train the network. Thus, in one or some embodiments, the labels for the target salt feature may be used in combination with other salt features, such as any one, any combination, or all of the TOS label, BOS label, or overhang label, and/or with other non-salt features, such as one or both of P-wave velocity label or the input patch. In one or some embodiments, the network comprises at least one encoder (such as a single encoder configured to perform feature extraction and down-sampling), a transition module (e.g., configured to connect between the feature spaces on the input and the output sides), and at least one decoder (e.g., a single decoder assigned to each feature) configured to construct the output (e.g., an output channel) from the features. In this way, the network is tasked with generating not only an output for the target salt feature (e.g., an output channel for the salt mask feature) but also for other target feature(s) (e.g., output channels for other salt-related features such as a TOS output channel and/or BOS output channel and/or other subsurface feature output channels). In this way, the network may benefit from the expanded availability of training data. For example, the network may be trained not merely using salt mask feature labels, but also using TOS labels, BOS labels, P-wave labels, etc., to the extent those other labels are available. Further, the network may be trained across the different features, such as across the target salt feature and at least one other feature, in combination, thereby improving the network's output of the target salt feature.

Further, in one or some embodiments, the network may include additional connections amongst the different features, such as amongst the different output channels. For example, one or more additional transformation networks may be structured between the target salt feature output channel and the output channel(s) for other salt feature(s). In particular, because the target salt feature output and the output(s) for the other salt feature(s) should be correlated, a lighter-weight image transformation network may be imposed between the target salt feature output and each of the one or more outputs for the other salt features. For example, a first lighter-weight transformation network is between the predicted salt mask output channel and the TOS output channel (e.g., the first lighter-weight transformation network receives as input the salt feature output and whose output is combined with the TOS feature output to form a modified TOS feature output, which is in turn compared with the TOS label 170) and/or a second lighter-weight transformation network between the predicted salt mask output channel and the BOS output channel (e.g., the second lighter-weight transformation network receives as input the salt feature output and whose output is combined with the BOS feature output to form a modified BOS feature output, which is in turn compared with the BOS label 174). In one or some embodiments, these image transformation networks may be lighter in weight from the overall network in one of several ways, such as including fewer hidden layers.

In this way, the methodology improves the network architecture while expanding the feature space covered by training data. With expanded output channels (e.g., not merely the salt feature output channel but also other feature output channel(s)), the methodology may use a neural network that takes multiple types of labels, which not only expands the availability of training dataset, but also adds regularization between different output channels by sharing latent spaces and enforcing convolutional connections.

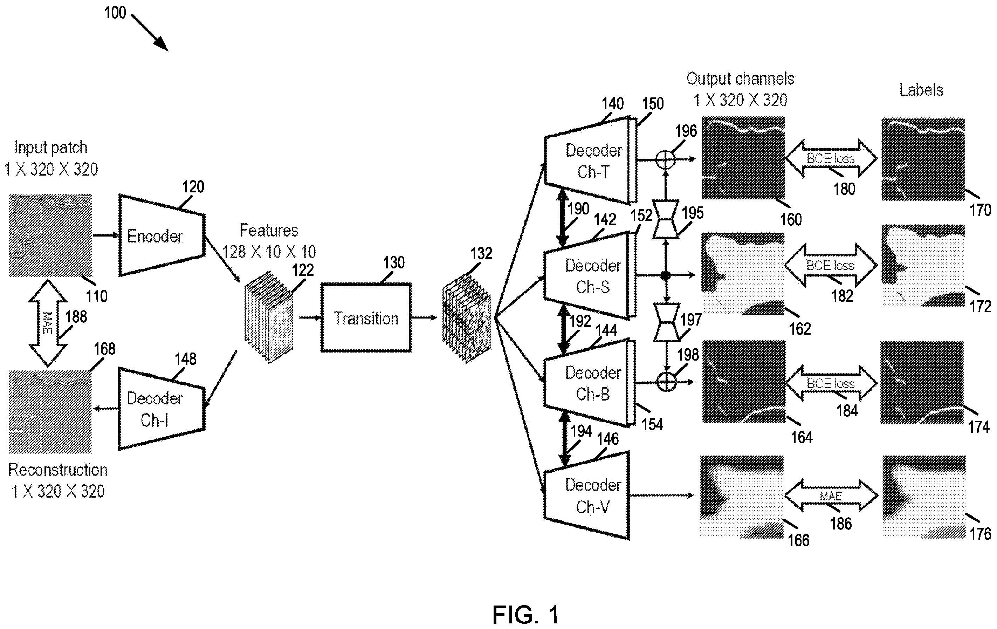

Referring to the figures, FIG. 1 is an example network architecture 100 for training a neural network to generate a salt feature model. In one or some embodiments, network architecture 100 includes elements of an image transformation network but with additions. See Johnson, Justin, Alexandre Alahi, and Li Fei-Fei, "Perceptual losses for real-time style transfer and super-resolution", European conference on computer vision. 694-711. https://link.springer.com/chapter/10.1007/978-3-319-46475-6_43 (2016); Kaur, Harpreet, Nam Pham, and Sergey Fomel, "Estimating the inverse Hessian for amplitude correction of migrated images using deep learning", SEG Technical Program Expanded Abstracts 2019, 2278-2282. Society of Exploration Geophysicists. https://library.seg.org/doi/abs/10.1190/segam2019-3207296.1 (2019)). In particular, network architecture 100 may include three components: encoder 120 configured to perform feature extraction and down-sampling; transition module 130 configured to serve as the connection between the feature spaces on the input side and the output side; and one or more decoders configured to construct the output from the features (e.g., decoder channel T 140 (for output channel T 160 designated as the TOS mask output channel); decoder channel S 142 (for output channel S 162 designated as the salt-mask output channel); decoder channel B 144 (for output channel B 164 designated as the BOS mask output channel); decoder channel V 146 (for output channel V 166 designated as the P-wave velocity output channel); and decoder channel I 148 (for output channel I 168 designated as the reconstructed image channel)).

In one or some embodiments, the input layer of encoder 120 takes seismic data, such as input patch 110 (e.g., a 1x320x320-sized patch sampled from seismic image (1 pixel by 320 pixels by 320 pixels sized patch), which may have sampling rate of 25 meters). In one or some embodiments, the output of one, some, or each of decoder channel T 140, decoder channel S 142, decoder channel B 144, decoder channel V 146, decoder channel I 148 is of the same size, which may yield a pixel-to-pixel transform.

In this regard, in one or some embodiments, network architecture 100 disclosed in FIG. 1 is configured to analyze and operate on 2D image patches. Alternatively, or in addition, network architecture 100 may be applied in 3D (e.g., given sufficient processing and/or memory capability). For example, network architecture 100 may accept 3D data as input, which may necessitate a larger number of parameters compared to a 2D network with the same number of layers and feature space size. In one or some embodiments, network architecture 100 as a 3D network may be limited to smaller patch size, thereby reducing its field of view. A larger patch size that covers both TOS and BOS may be expected to generate more accurate predictions and generalizable networks. See Farabet, Clement, Camille Couprie, Laurent Najman, and Yann LeCun, "Learning hierarchical features for scene labeling", IEEE transactions on pattern analysis and machine intelligence (IEEE) 35: 1915-1929. https://ieeexplore.ieee.org/abstract/document/6338939/ (2012); Sen, Kainkaryam, et al. 2019; Shi, Wu and Fomel 2019. Therefore, a 2D-patch based network may be used. However, a 3D network has the advantages in comprehending the 3D complexity of salt geometry and avoiding oscillatory artifacts generated by 2D slice-by-slice processing. Therefore, a 3D network may be a powerful secondary processing tool, such as focused on certain small areas where 2D networks may suffer.

Referring back to FIG. 1, encoder 120 extracts features 122, which are input to transition module 130. In one or some embodiments, encoder 120 includes 5 layers, where one, some or each of the layers involves a 2D convolution, a rectified linear unit (ReLU) activation (e.g., a unit employing a rectifier), and a max-pooling module (e.g., maximum (max) pooling may be performed by applying a max filter to (usually) non-overlapping subregions of the initial representation).

Transition module 130 is configured to generate transition module output 132, with some or all of which being input to the decoder(s). In one or some embodiments, transition module 130 is composed of nine repeating residual blocks (see He, Kaiming, Xiangyu Zhang, Shaoqing Ren, and Jian Sun, "Deep residual learning for image recognition", Proceedings of the IEEE conference on computer vision and pattern recognition. 770-778. https://openaccess.thecvf.com/content_cvpr_2016/html/He_Deep_Residual_Learning_CVPR_2016_paper.html (2016)), which may increase the depth of convolutional connection between the input patch 110 and the prediction outputs (e.g., output channel T 160; output channel S 162; output channel B 164, and output channel V 166) without suffering vanishing gradients.

As shown in FIG. 1, network architecture 100 includes multiple output channels, each with its respective decoder. In particular, network architecture 100 includes five output channels including decoder channel T 140 (for output channel T 160 corresponding to the TOS feature), decoder channel S 142 (for output channel S corresponding to the salt mask feature), decoder channel B 144 (for output channel B corresponding to the BOS feature), decoder channel V 146 (for output channel V corresponding to the P-wave velocity feature), and decoder channel I 148 (for output channel I corresponding to image reconstruction feature). As discussed above, one salt feature, such as the salt mask feature, may be selected with one or more other features, such as any one, any combination, or all of the TOS feature, the BOS feature, the P-wave velocity feature, or the image reconstruction feature, in training the network architecture 100. Though FIG. 1 illustrates four features (other than the salt mask feature), fewer than four features (or greater than four features) are contemplated. As discussed above, the other features may be selected based on whether sufficient labeled training data is available (e.g., the amount of labeled training data is greater than a predetermined amount). Further, though not shown, other subsurface features, in addition to or instead of those featured in FIG. 1, may be used. As merely one example, the salt feature overhang may be used.

In one or some embodiments, a decoder may be assigned to each of the multiple output channels. In particular, FIG. 1 illustrates decoder channel T 140, decoder channel S 142, decoder channel B 144, decoder channel V 146, and decoder channel I 148. In one or some embodiments, decoders 140, 142, 144, 146, 148 may have the same structure in order to generate the output on the respective channels. In particular, each of the decoders 140, 142, 144, 146, 148 may include 5 layers composed of an up-sampling, a 2D convolution and a ReLU activation function. In a particular embodiment, decoders for certain output channels, such as decoder channel T 140, decoder channel S 142, and decoder channel B 144 for output channel T 160, output channel S 162, and output channel B 164, respectively, may include an added layer with a 2D convolution and a sigmoid activation function prior to output. This is illustrated as decoder channel T normalization 150, decoder channel S normalization 152, and decoder channel B normalization 154. Further, in one or some embodiments, one or more layers in some or all of the channels, such as the deepest three layers for output channel T 160, output channel S 162, output channel B 164, and output channel V 166, may share parameters to enforce the similarity in geometry of these outputs. This is illustrated in FIG. 1 by double-sided arrow 190, double-sided arrow 192, and double-sided arrow 194, indicating sharing of parameters for the deepest three layers.

The neural network may be iteratively modified based on a predicted error for the neural network. One measure of the predicted error is a loss function. In particular, a loss function, such as a total loss function, may be constructed as a sum of misfits between each output channel with the corresponding label. In turn, the loss function may be used to calculate gradients, with the gradients used to update or modify the weights of the neural network, thereby iteratively reducing (or minimizing) the loss. Various loss functions may be used, such as binary cross-entropy (BCE) loss or mean-absolute-error (MAE, also known as L_1 error). As discussed further below, different loss functions may be used. As merely one example, a first methodology, such as BCE, may be used for salt features and a second methodology, such as MAE, may be used for non-salt features.

BCE loss may be used for the binary classification tasks. In using a BCE loss function, only one output node is needed to classify the data into two classes. The output value may be passed through a sigmoid activation function and the range of output is 0 to 1. MAE is a measure of errors between paired observations expressing the same phenomenon. As shown in FIG. 1, BCE loss may be used for Channels S, T and B (whose outputs range is 0 to 1), and MAE loss may be used for Channel I and V. Specifically, the TOS loss (which may be represented by BCE loss 180) may be calculated between the output channel T 160 and TOS label 170, the salt-mask loss (which may be represented by the BCE loss 182) may be calculated between output channel S 162 and salt-mask label 172, and the BOS loss (which may be represented by the BCE loss 184) may be calculated between output channel B 164 and BOS label 174. The P-wave loss (which may be represented by MAE loss 186) may be calculated between the output channel V 166 and P-wave label 176, and the image patch loss (which may be represented by the MAE loss 188) may be calculated between output channel I 168 and input patch 110.

Thus, FIG. 1 illustrates one example of an architecture to perform a machine learning (ML)-based interpretation task, with the architecture being presented with examples of input values (e.g., seismic images) and corresponding target output values (e.g., labels of geological features such as fault or salt labels). A ML model (such as a salt feature model) with unknown model parameters may be trained to map the input values (e.g., seismic image(s)) to the target output value(s) (salt mask image(s)). In one or some embodiments, the goal of the training is to determine the unknown model parameters from the training examples such that the ML model may accurately predict an output value when new or unseen input values are present. The ability of the ML model to perform well on new or unseen input data is referred to as "model generalization," or simply "generalization." Typically, a significant amount of training data may be involved in training a ML model that may generalize well, particularly when the ML model is based on neural networks such as DNN. Lack of sufficient amount of training data may lead to ML models that merely memorize input-output relationships available in the training data, but that perform poorly on new test data. This problem is referred to as "overfitting." As discussed above, because of the multiple channels, additional training data may be available so that the likelihood of overfitting may be reduced.

As discussed above, various features may be logically correlated. For example, the TOS feature, the salt mask feature, and the BOS feature each are related to the salt in the subsurface. Thus, in one or some embodiments, to further enforce connectivity between the output channels S, T and B, which logically should be correlated, one or more additional image transformation networks, such as one or more lighter-weight image transformation networks, may be used to further constrain the network architecture 100. In particular, one or both of a first lighter-weight image transformation network 195 or a second lighter-weight image transformation network 197 may be used. In practice, first lighter-weight image transformation network 195 and second lighter-weight image transformation network 197 may use essentially the same but shallower structures as described before with regard to encoder 120 and decoder channel T 140, decoder channel S 142, and decoder channel B 144 described above. For example, each of first lighter-weight image transformation network 195 or second lighter-weight image transformation network 197 may have an encoder and a decoder with three layers (e.g., fewer layers) and no residual blocks in-between. As a consequence, the gradient flow may pass through Channel S to Channel T (via first junction 196) and through Channel S to Channel B (via second junction 198). In this way, when optimizing the loss function based on TOS or BOS, the decoder for salt body may also being trained.

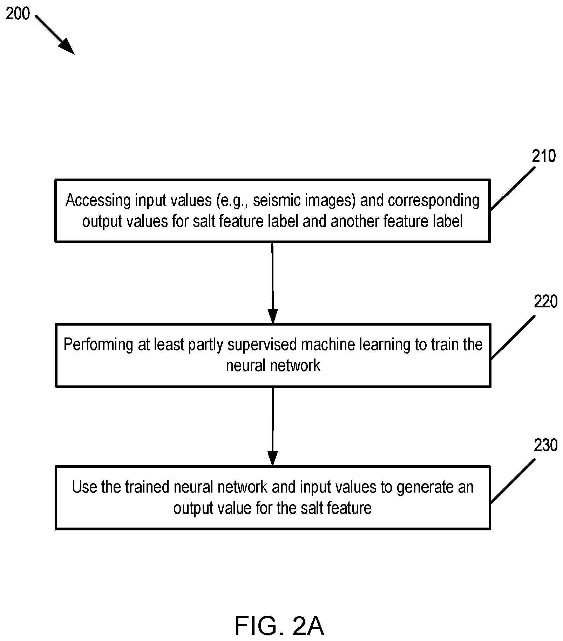

FIG. 2A is an example flow diagram 200 for training the neural network and using the trained neural network. At 210, input values, such as seismic images, and corresponding output values, such as labeled output (including output values for the manually-labeled salt feature and other manually-labeled feature(s)). In the example discussed in FIG. 1, the salt-mask feature is the salt feature of interest. In this regard, for seismic images, the corresponding salt-feature label and at least one other feature label, such as any one, any combination, or all of the TOS label, the BOS label, the P-wave label, or the overhang label, may be accessed.

At 220, machine learning, such as semi-supervised machine learning using labeled outputs, are performed to train the neural network. At 230, the trained neural network may then be used in order to generate outputs for a corresponding input, such as an output for the salt feature (e.g., the salt-mask feature) responsive to a seismic image.

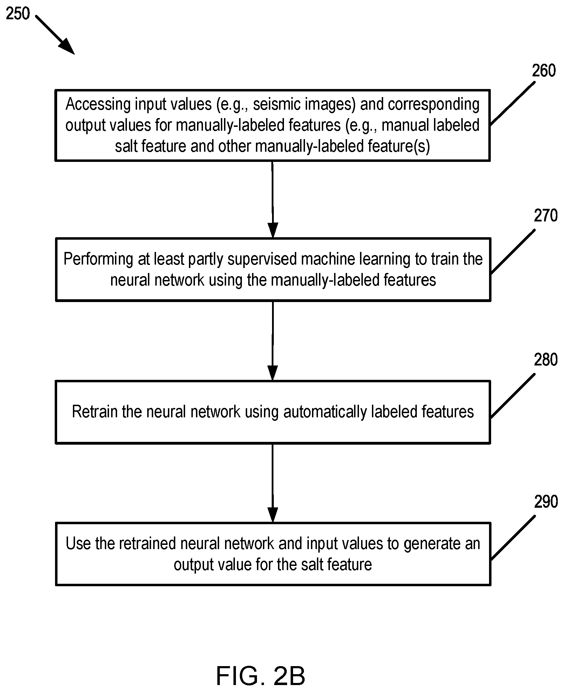

FIG. 2B is a second example flow diagram 250 for training and retraining the neural network and using the retrained neural network. As discussed above, the training of the neural network may be based on manually-labeled features. Alternatively, the training of the neural network may be iterative based on different types of labeled features. As one example, the neural network may initially be trained using manually labeled features, and then may be retrained using automatically labeled features. For example, at 260, input values, such as seismic images, and corresponding output values for manual labeled features, such as a manually-labeled salt feature and other manually-labeled feature(s), may be accessed. At 270, supervised machine learning may be performed to train the neural network using the manually-labeled features. After which, at 280, the neural network may be retrained using automatically labeled features. In practice, the amount of manually-labeled data, while potentially more accurate, may be less than the amount of automatically-labeled data. Nevertheless, the initial training of the network may be performed using the manually-labeled data, with further refinement of the trained neural network being performed using the potentially less accurate but more voluminous automatically-labeled data. After retraining, at 290, the retrained neural network and input values may be used to generate an output value for the salt feature.

In one or some embodiments, the total loss function may comprise the aggregation of the misfits between each output channel of the network (such as network architecture 100) and the corresponding label. For example, in FIG. 1, the total loss function may comprise the aggregation of misfits for TOS loss, salt-mask loss, BOS loss, P-wave loss, and image patch loss. Alternative, the loss function may comprise less than all of the misfits between each output channel of the network.

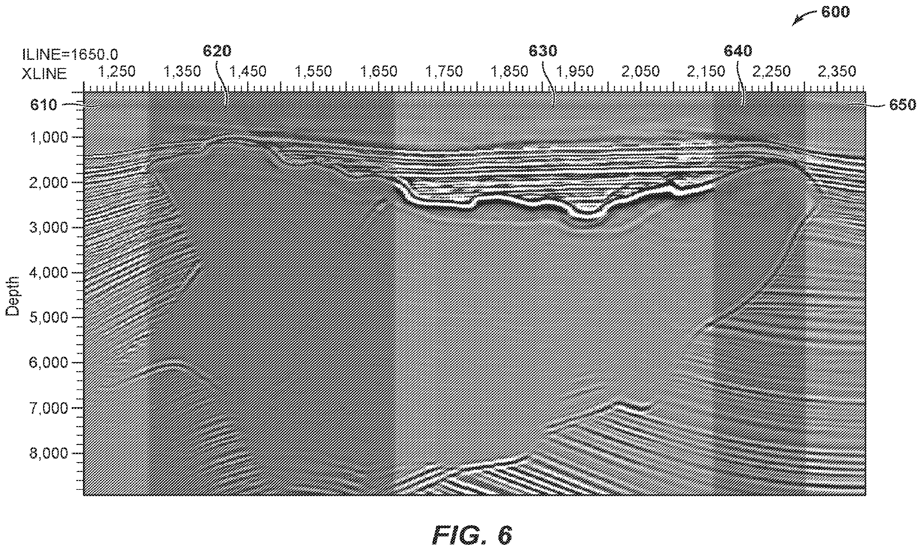

Further, some or all training data may be accompanied by a data mask, discussed further below with regard to FIG. 6, in which a masked loss function may defined by:

$$L_*^M(F(x), y^\dagger) = L_*(M \odot F(x), M \odot y^\dagger), \quad * \in \{\text{BCE}, \text{MAE}\} \qquad (1)$$

In Equation (1), $x$ is the input seismic image patch, $F$ stands for the nonlinear map generated by neural network, $y^\dagger$ is the corresponding ground-truth label, $M$ is a data mask with the same dimension as $x$ and $y^\dagger$, and $\odot$ stands for elementwise product between two tensors.

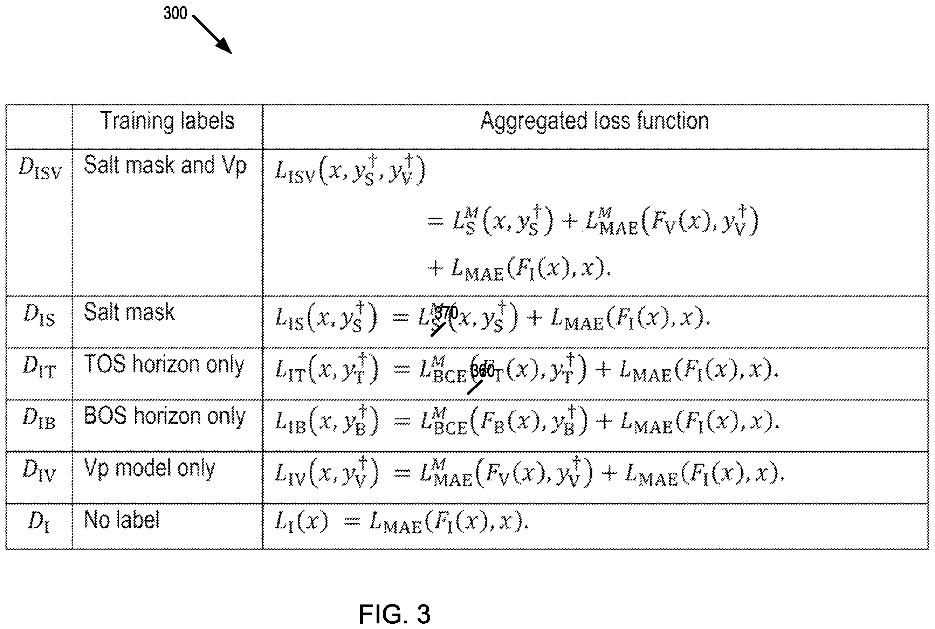

Various categories of training data may be considered. Note that when the salt mask label $y_S^\dagger$ is available, a TOS label $y_T^\dagger$ and a BOS label $y_B^\dagger$ may be extracted from the salt mask by simply applying differentiation (or another edge-detection algorithm) along depth direction, and the extraction operation of TOS label and BOS label out of the salt mask may be denoted by $y_T^\dagger = f_{\text{TOS}}(y_S^\dagger)$ and $y_B^\dagger = f_{\text{BOS}}(y_S^\dagger)$, respectively. As one example, six categories of training data, such as described in Table 300 in FIG. 3. The subscripts "T", "S", "B", "V", "I" correspond to the five output channels (output channel T 160, output channel S 162, output channel B 164, output channel V 166, and output channel I 168), which applies to label $y^\dagger$ and network-based non-linear map $F$. The functions $F_{\text{ST}}$ and $F_{\text{SB}}$ represent the light-weight image transformation blocks from Channel S to T (see first lighter-weight image transformation network 195) and S to B (second lighter-weight image transformation network 197), respectively. In other words, nonlinear functions $F_S$, $F_T$, $F_B$, $F_{\text{ST}}$ and $F_{\text{SB}}$ are defined by the neural network, such that given seismic image $x$, $F_S(x)$ stands for the predicted salt mask, $F_T(x)$ stands for the predicted TOS, $F_B(x)$ stands for the predicted BOS, $F_{\text{ST}}(*)$ takes predicted or human-labeled salt mask and outputs predicted TOS, and $F_{\text{SB}}(*)$ takes predicted or human-labeled salt mask and outputs predicted BOS. Therefore, an aggregated loss function based on salt mask may be as follows:

$$L_S^M(x, y_S^\dagger) = L_{\text{BCE}}^M(F_S(x), y_S^\dagger) + L_{\text{BCE}}^M\left(F_T(x), f_{\text{TOS}}(y_S^\dagger)\right) + L_{\text{BCE}}^M\left(F_B(x), f_{\text{BOS}}(y_S^\dagger)\right) +$$

$$L_{\text{BCE}}^M\left(F_{\text{ST}}(F_S(x)), f_{\text{TOS}}(y_S^\dagger)\right) + L_{\text{BCE}}^M\left(F_{\text{SB}}(F_S(x)), f_{\text{BOS}}(y_S^\dagger)\right) +$$

$$L_{\text{BCE}}^M\left(F_{\text{ST}}(y_S^\dagger), f_{\text{TOS}}(y_S^\dagger)\right) + L_{\text{BCE}}^M\left(F_{\text{SB}}(y_S^\dagger), f_{\text{BOS}}(y_S^\dagger)\right) \qquad (2)$$

which applies to the first two categories of training datasets in Table 300. The total loss function may be a summation of losses for each listed category of training dataset, such as:

$$L_{\text{Total}} = \sum_{D_{\text{ISV}}} L_{\text{ISV}}(x, y_S^\dagger, y_V^\dagger) + \sum_{D_{\text{IS}}} L_{\text{IS}}(x, y_S^\dagger) + \sum_{D_{\text{IT}}} L_{\text{IT}}(x, y_T^\dagger) + \sum_{D_{\text{IB}}} L_{\text{IB}}(x, y_B^\dagger) +$$

$$\sum_{D_{\text{IV}}} L_{\text{IV}}(x, y_V^\dagger) + \sum_{D_{\text{I}}} L_{\text{I}}(x) \qquad (3)$$

The network structure, such as illustrated in FIG. 1, may result in one or more benefits. First, the multiple outputs (such as the five outputs illustrated in FIG. 1) may yield consistency in geometry and training because collectively the multiple outputs may provide better constraints compared with having the salt mask as the sole output. In particular, more attention may be placed on the salt boundaries while minimizing one or both of the TOS and BOS misfits. Secondly, the choice of multiple inputs may significantly expand the availability of quality training data. As discussed above, training data, particularly manually labeled training data for the salt feature at issue, may be sparse. In contrast, in one or some embodiments, training data from salt features other than the salt feature at issue may be used. In one particular example, while only final processed data with carefully and densely picked TOS and/or BOS may be considered as reliable training data in the single-output network, good training data for the network may include intermediate-processed data (e.g., sediment-flood image with only first TOS horizon being sparsely picked; salt-flood image with only partially picked BOS horizons; or FWI-derived velocity combined with a migration image with no human interpretation). Moreover, multiple outputs may provide extra information that is meaningful for further quality control and scenario tests. Although the TOS/BOS prediction may show coherency with salt body prediction, they may not always be identical, and may come with different uncertainty maps. In this regard, thresholding differently on each output channel may provide various scenarios that may be further tested. Finally, an architecture taking multiple labels may easily be adopted to perform a semi-supervised training, depending on whether particular types of partial labels, such as sparsely picked horizons or FWI inverted velocity model, are available. Any of these incomplete, but nevertheless meaningful, pieces of information may improve prediction results. Further, even without the additional labels, the encoder-decoder loop for seismic reconstruction may help tune the network based on target data that was not used in initial training.

In one or some embodiments, the neural network structure may be used in combination with one or both of a data preprocessing strategy and an augmentation strategy (e.g., see US Patent Application Publication No. 2020/0183035 A1). For example, the training data may comprise a seismic image, which may be generated from any type of migration workflow. In one or some embodiments, the seismic image is normalized. Normalizing seismic data to natural distribution $N(0,1)$ may potentially shift the location of zero crossings. Alternatively, a rescaling may be performed without biasing so that the standard deviation of the overall seismic volume is equal to 1. Various types of companion labels may be processed accordingly. For example, the salt body label may comprise a pixel-wise map of the same size as the seismic volume, but with binary values (e.g., 1 indicative for salt and 0 indicative for non-salt). Further, both TOS and BOS labels may be converted from horizons to the pixel-wise map via flooding down TOS or flooding up BOS by a few pixels (e.g., 200 meters). Since most of the time human-picked horizons are sparse, with significant gaps due to geological uncertainty or limited time allotted for interpretation, a data mask $M$ may include data indicative of traces with interpreted horizon and traces with no picking being generated. For example, the data mask $M$ may include a value of 1 indicative of traces with interpreted horizon and a value of 0 indicative of traces with no picking being generated. An example of this is illustrated in the image 600 of FIG. 6 in which sections 610, 630, 650 are indicative of traces with no picking being generated and sections 620, 640 are indicative of traces with interpreted horizon.

In one or some embodiments, a $V_p$ model may be used as a label in the network, which may come from full wavefield inversion (FWI) output, which may have a smooth salt boundary. If a legacy model with sharp salt boundary is used, a filter, such as a Gaussian smoothing filter with 400 meter (m) window-size, may be applied. The $V_p$ model may then be linearly rescaled, such as by:

$$y_V = \frac{V_p - V_{water}}{V_{Salt} - V_{water}} \qquad (4)$$

2D image patches for training may be randomly selected from 3D volume, such as along in-lines, cross-lines and two diagonal ($45^0$) lines in between. These patches may be augmented, such as through random horizontal flipping and/or addition of random noise. In order to enhance robustness of the network, a mask may be used that randomly mutes a percentage (e.g., 40%) of traces in the input image patch before entering the encoder 120. See DeVries and Taylor 2017.

After training and during the prediction procedure, target seismic images may also be processed in 2D patches, such as along in-lines, cross-lines and two diagonal ($45^0$) lines. In one or some embodiments, for each processing direction, adjacent patches may be overlapped (e.g., overlapped by fifty (50) pixels), where a taper (e.g., a weighted cosine taper) may be applied to the outputs within the overlapping region. The 2D predictions (such as the four 2D predictions along in-lines, cross-lines and two diagonal lines) may be aggregated afterwards, producing an ensemble prediction in 3D for each of the output channels. To mitigate oscillations produced by 2D processing, in one or some embodiments, a filter, such as a median filter, may be applied on each depth slice. Since the TOS label in training data is generated by flooding down the horizon and BOS label is generated by flooding up the horizon, in order to extract horizons from the output probability maps with values in the range of [0, 1], the TOS output channel may be cast into binary values of 0 and 1 by thresholding at 0.25, and the upper edge is extracted as TOS horizon. Similarly, the BOS output may be processed with the threshold of 0.25 and lower edge extracted as BOS horizon.

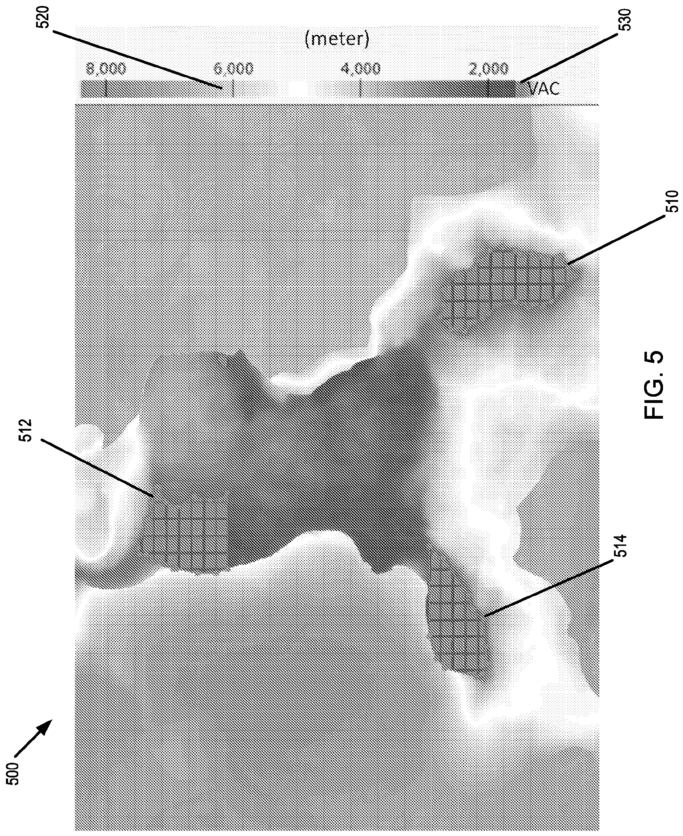

In one or some embodiments, the labeled training data may be based on final-processed full angle stack Kirchhoff migration image from two different blocks, one located adjacent to the target area and the other farther away with significantly different geological structures. A full-angle stack Kirchhoff migration image based on a legacy velocity model with minimal processing for a small sub-region of the target area may be used as a validation dataset, where the salt mask was obtained by thresholding the corresponding velocity model. By taking advantage of the multi-label functionality, the methodology may make use of a partially-labeled dataset comprising a plurality (e.g., forty-four (44)) sparsely picked TOS horizons in a small subset of target lines along with the sediment-flood image (see FIGS. 5 and 6), which includes features form target data in the training procedure, also known as semi-supervised leaning. For example, FIG. 5 includes an image 500, illustrating outside polygons 510, 512, 514 being TOS horizon from legacy model (excluded from training data), with legend 520 of colors standing for TOS depth in km, while color 530 indicating area with vacant (VAC) label of TOS horizon.

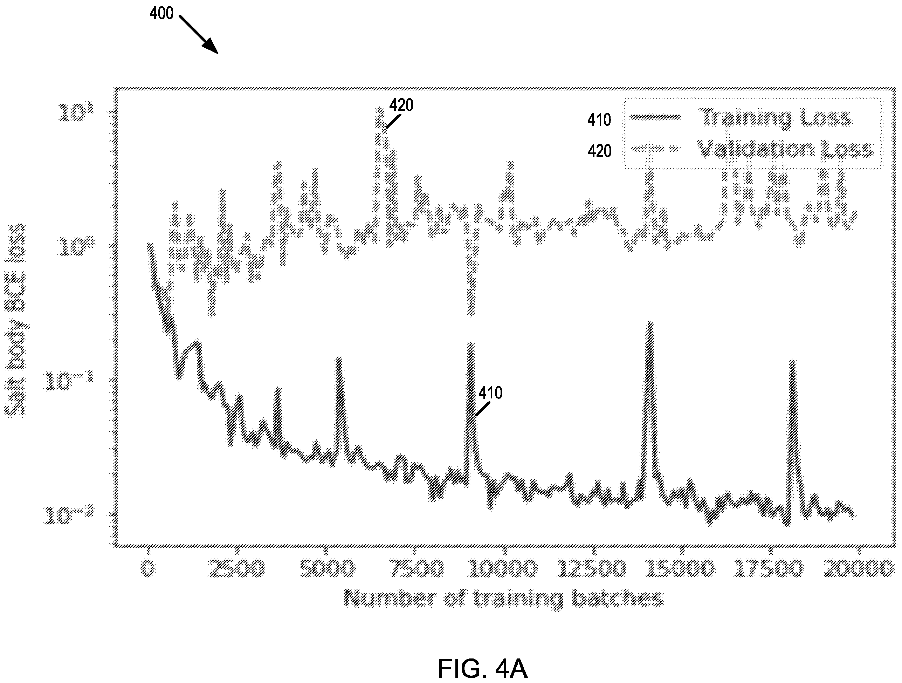

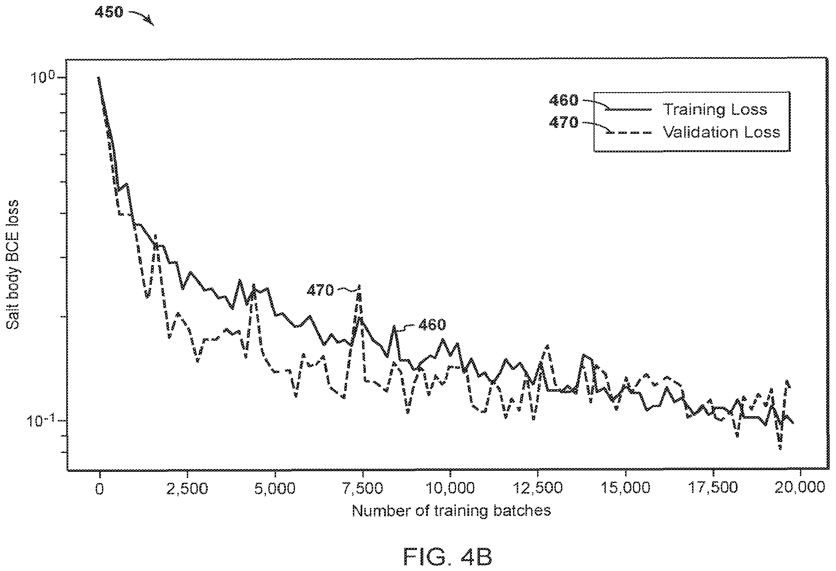

For comparison purposes, a standard U-net (e.g., five layers with skip connections, see (Ye, et al. 2019) for details) may be trained on the same training dataset excluding the additional partially labeled data. The training and validation losses are plotted in FIGS. 4A and 4B, with the graph 400 in FIG. 4A illustrating that the standard U-net suffers from significant overfitting due to the discrepancy between training and validation data (see comparison of training loss curve 410 versus validation loss curve 420), while the graph 450 in FIG. 4B illustrating that the network disclosed herein does not (see comparison of training loss curve 460 and validation loss curve 470). In this sediment flood procedure, the TOS horizon may be extracted from both the salt body and TOS output channels, which are correlated but may not necessarily agree with each other everywhere. These disagreements may be useful indicators of higher prediction uncertainty that requires further human attention.

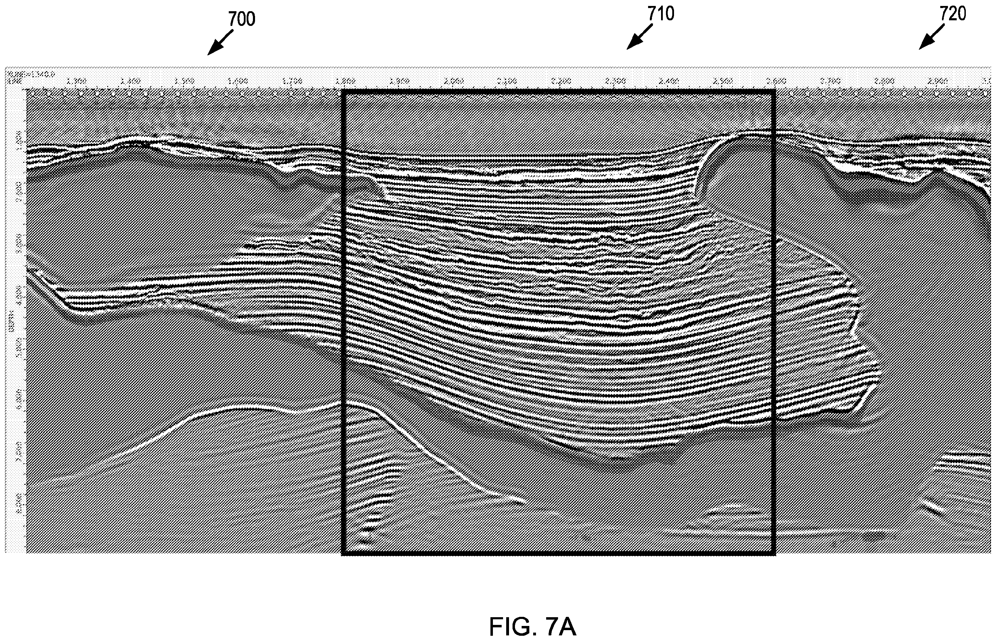

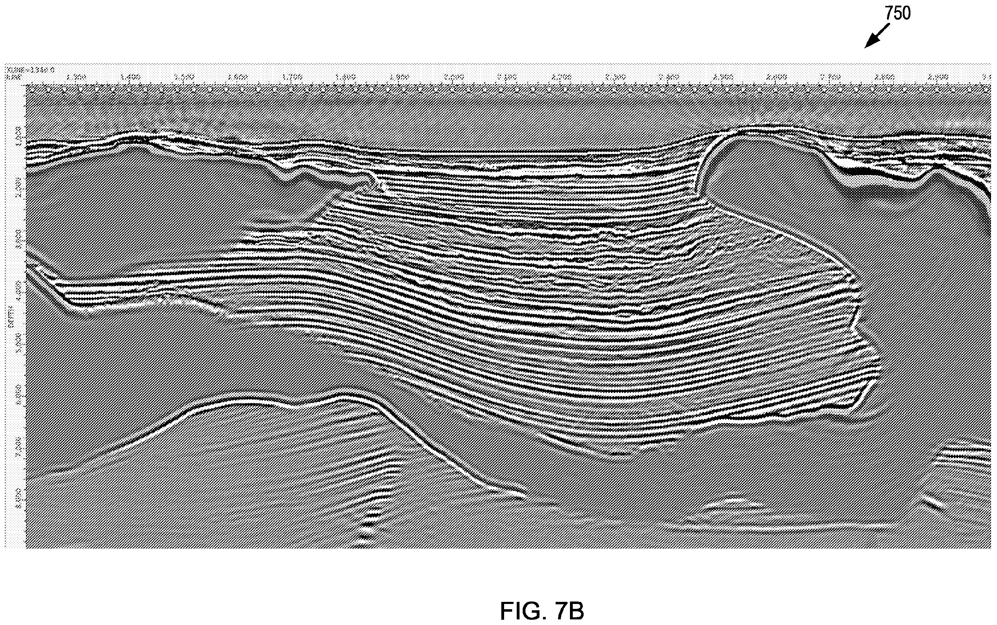

FIG. 7A is an image of a prediction result using the disclosed methodology showing 3-channel outputs including salt-mask channel output, TOS channel output, and BOS channel output. FIG. 7B is an image 750 of a prediction result using the disclosed methodology showing only salt-mask channel output. Specifically, the image in FIG. 7A comprises a semi-supervised training region 700 with first TOS interpreted only, a supervised training region 710 with fully interpreted salt-mask, and a verification region 720 (alternatively termed a blind-test region) with no interpretation (e.g., no label is provided). Thus, in one or some embodiments, the salt features may be interpreted in one of several ways. Merely by way of example, first TOS interpreted only may comprise the shallowest top of salt boundary (e.g., if there are multiple locations of TOS boundary exist on particular location, such as on location ILINE 1800 on legend 520 in FIG. 5 there are two salt bodies at different depth, each has a top boundary, with only the shallower one being used as a training label).

Semi-supervised training for semi-supervised training region 700 may comprise any one, any combination, or all of the following: (1) the labels for TOS may be applied to train the output of one or more other channels (e.g., BOS, saltmask, etc.); (2) the auto-encoder (e.g., input - encoder - decoder - channel I) may extract key features; and (3) the iterative scheme may be based on inaccurate label that may automatically estimate the consistency between prediction and the label, and may be applied to the consistent part as additional training label in the new iteration of training.

Supervised training region 710 may use full labels, including TOS, BOS, salt-mask, and P-wave speed for training. In this regard, the training may be termed "supervised". Nevertheless, the network may include the auto-encoder which may also be considered "semi-supervised" in that regard. Further, supervised training region 710 may be considered fully interpreted in that all of the labels are provided by human interpretation (namely human picking) including for TOS, BOS, and salt body in between.

In practice, the methodology may generate a first round prediction output with minimal human input as described above. For areas that have been included in training dataset and benefited from human picking, prediction of various salt feature(s), such as TOS, may agree well with the label, while in areas that have not been included in training datasets, the neural network may also generate the majority of the salt feature(s), such as TOS, with reasonable accuracy. However, false-positives may be observed around bright events in sediment region, and false-negative predictions may also occur where salt comprises complex structure.

Further, in practice, the outputs from the various channels, such as for the salt feature of interest and one or more other channels, may be used in combination. For example, when only the TOS is of interest, the ch-T output may first be used to generate the desired horizon, and ch-S may be used to fill the gap, if there is any. This may similarly be applied to BOS outputs. Ch-S by itself may be applied to certain situations when salt mask is needed, for example, in regularizing the full-waveform inversion.

As discussed above, training may be performed iteratively. As one example, in a second training-prediction iteration, the semi-supervised learning may be further implemented by including a reference salt feature label, such as a TOS label, obtained from legacy model, to improve the accuracy in the prediction generated from the first round of training the neural network. In particular, training of the network may be performed using partial labels obtained from legacy model (e.g., owing to the fact that the predicted TOS may agree with legacy model to within 20m difference for about 50% of the region). In the example of TOS, the following strategy may be used to extract a subset of reference TOS horizon $\Gamma_0$:

$$\Gamma_0' = \{r \in \Gamma_0 | F_\mathrm{T}\big(x(r + \varepsilon)\big) \geq 0.5\} \qquad (5)$$

where $r$ is the spatial coordinate in the seismic image, $\varepsilon$ is a +100 m offset along depth direction due to the fact that TOS as training label has been flooded by 200 m, and $F_\mathrm{T}(x(r))$ generates the probability score of presence of TOS at location r.

Considered as a trustworthy subset of reference TOS, $\Gamma_0'$ is included with the sediment-flood image as additional training dataset for a second round tuning of neural network. In practice, a significant improvement may be achieved by removing almost all artifacts in sediments and filling in gaps that existed in the first round. The final TOS horizon may be generated based on this TOS prediction result by human quality control, snapping to the nearest peak (or trough), and manually fixing small pieces in uncertain areas. Compared with the legacy model-based TOS, the DNN-predicted one may be much more accurate in deep salts, which may significantly reduce cycle time by limiting laborious human picking to much smaller uncertain regions.

During the salt-flood cycle, where the final TOS horizon from the sediment flood step is given, the salt-flood image may be generated and the BOS picking may be conducted in the semi-supervised manner. The RTM image may be used in order to obtain better illumination of BOS, which however, may have lower resolution compared with the Kirchhoff images in the labeled training data. The final TOS horizon may be used as partial label corresponding to the salt-flood RTM image and conducting a fine-tuning of the neural network, so that the prediction is not impacted by the discrepancy between spectra of Kirchhoff and RTM images. High-accuracy results may be generated for both the salt-body and BOS. An image may illustrate the BOS horizon, which may be continuous and smooth in most regions, except for small outliers that may require further human interaction.

In this regard, the methodology may be based on a specially designed multi-task deep neural network for simultaneous automatic salt body and boundary horizons interpretation, which may significantly reduce human labor by restricting the need to manual picking to small uncertain regions. By constructing an extensive network architecture with multiple output channels, the methodology may include any one, any combination, or all of the following benefits: simultaneous generation of multiple prediction results, which may provide extra information that may be meaningful for further quality control and scenario tests; connections between outputs channels may yield consistency in geometry and may provide better constraints compared with having a single salt feature output (e.g., the salt mask as the sole output), whereby, more attention may be placed on other features (e.g., other salt features, such as the salt boundaries while minimizing TOS and BOS misfits); the choice of multiple input labels may significantly expand the availability of quality training data (e.g., based the methodology, good training data may include intermediate-processed data, such as sediment-flood image with only first TOS horizon being sparsely picked, salt-flood image with only partially picked BOS horizons and/or FWI-derived velocity combined with a migration image with no human interpretation); and with the architecture taking multiple labels, a semi-supervised training may be straightforwardly adopted, depending on whether particular types of partial label, such as sparsely picked horizons or FWI inverted velocity model, are available.

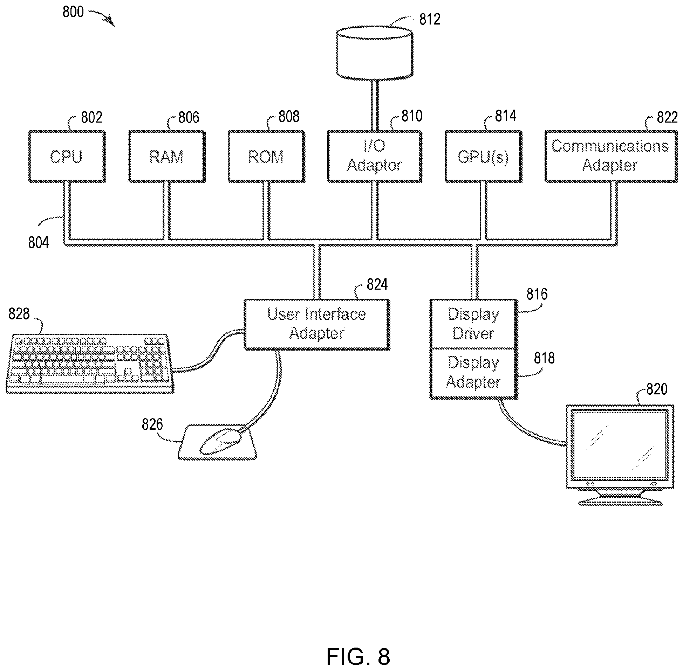

In all practical applications, the present technological advancement is used in conjunction with a computer, programmed in accordance with the disclosures herein. For example, FIG. 8 is a diagram of an exemplary computer system 800 that may be utilized to implement methods described herein. A central processing unit (CPU) 802 is coupled to system bus 804. The CPU 802 may be any general-purpose CPU, although other types of architectures of CPU 802 (or other components of exemplary computer system 800) may be used as long as CPU 802 (and other components of computer system 800) supports the operations as described herein. Those of ordinary skill in the art will appreciate that, while only a single CPU 802 is shown in FIG. 8, additional CPUs may be present. Moreover, the computer system 800 may comprise a networked, multi-processor computer system that may include a hybrid parallel CPU/GPU system. The CPU 802 may execute the various logical instructions according to various teachings disclosed herein. For example, the CPU 802 may execute machine-level instructions for performing processing according to the operational flow described.

The computer system 800 may also include computer components such as non-transitory, computer-readable media. Examples of computer-readable media include computer-readable non-transitory storage media, such as a random access memory (RAM) 806, which may be SRAM, DRAM, SDRAM, or the like. The computer system 800 may also include additional non-transitory, computer-readable storage media such as a read-only memory (ROM) 808, which may be PROM, EPROM, EEPROM, or the like. RAM 806 and ROM 808 hold user and system data and programs, as is known in the art. The computer system 800 may also include an input/output (I/O) adapter 810, a graphics processing unit (GPU) 814, a communications adapter 822, a user interface adapter 824, a display driver 816, and a display adapter 818.

The I/O adapter 810 may connect additional non-transitory, computer-readable media such as storage device(s) 812, including, for example, a hard drive, a compact disc (CD) drive, a floppy disk drive, a tape drive, and the like to computer system 800. The storage device(s) may be used when RAM 806 is insufficient for the memory requirements associated with storing data for operations of the present techniques. The data storage of the computer system 800 may be used for storing information and/or other data used or generated as disclosed herein. For example, storage device(s) 812 may be used to store configuration information or additional plug-ins in accordance with the present techniques. Further, user interface adapter 824 couples user input devices, such as a keyboard 828, a pointing device 826 and/or output devices to the computer system 800. The display adapter 818 is driven by the CPU 802 to control the display on a display device 820 to, for example, present information to the user such as subsurface images generated according to methods described herein.

The architecture of computer system 800 may be varied as desired. For example, any suitable processor-based device may be used, including without limitation personal computers, laptop computers, computer workstations, and multi-processor servers. Moreover, the present technological advancement may be implemented on application specific integrated circuits (ASICs) or very large scale integrated (VLSI) circuits. In fact, persons of ordinary skill in the art may use any number of suitable hardware structures capable of executing logical operations according to the present technological advancement. The term "processing circuit" encompasses a hardware processor (such as those found in the hardware devices noted above), ASICs, and VLSI circuits. Input data to the computer system 800 may include various plug-ins and library files. Input data may additionally include configuration information.

Thus, the computer is a high-performance computer (HPC), known to those skilled in the art. Such high-performance computers typically involve clusters of nodes, each node having multiple CPU's and computer memory that allow parallel computation. The models may be visualized and edited using any interactive visualization programs and associated hardware, such as monitors and projectors. The architecture of system may vary and may be composed of any number of suitable hardware structures capable of executing logical operations and displaying the output according to the present technological advancement. Those of ordinary skill in the art are aware of suitable supercomputers available from Cray or IBM or other cloud computing based vendors such as Microsoft, Amazon. In this regard, although the full training-prediction algorithm may be executable on a pure CPU-based machine, in one or some embodiments, such ML-based algorithms may be executed in one or more GPUs, which are expected to have tens or even hundreds times of acceleration.

In one or some embodiments, a current GPU implementation, the neural network model may be stored in GPU caches, and the training/prediction process may be roughly as follows: (1) using CPUs (in HPC) to read in and preprocess seismic data, including rescaling, generating masks, chopping into patches, shuffling, grouping into batches; (2) passing batches data from RAM to GPU caches; (3) computing neural network updates (in training) or output data patches (in prediction) on GPU; and (4) for prediction, post-process output patches and write to files.

The above-described techniques, and/or systems implementing such techniques, can further include hydrocarbon management based at least in part upon the above techniques, including using the one or more generated geological models in one or more aspects of hydrocarbon management. For instance, methods according to various embodiments may include managing hydrocarbons based at least in part upon the one or more generated geological models and data representations (e.g., seismic images, feature probability maps, feature objects, etc.) constructed according to the above-described methods. In particular, such methods may include drilling a well, and/or causing a well to be drilled, based at least in part upon the one or more generated geological models and data representations discussed herein (e.g., such that the well is located based at least in part upon a location determined from the models and/or data representations, which location may optionally be informed by other inputs, data, and/or analyses, as well) and further prospecting for and/or producing hydrocarbons using the well.

It is intended that the foregoing detailed description be understood as an illustration of selected forms that the invention can take and not as a definition of the invention. It is only the following claims, including all equivalents which are intended to define the scope of the claimed invention. Further, it should be noted that any aspect of any of the preferred embodiments described herein may be used alone or in combination with one another. Finally, persons skilled in the art will readily recognize that all of the steps in the disclosed method are performed using a computer so that the methodology is computer implemented. In such cases, the resulting physical properties model may be downloaded or saved to computer storage.

REFERENCES:

The following references are related to this technology area:

Rodriguez, C. R., C. A.-L. Jackson, A. Rotevatn, R. E. Bell, and M. Francis, "Dual tectonic-climatic controls on salt giant deposition in the Santos Basin, offshore Brazil", Geosphere (Geological Society of America) 14: pp. 215 to 242. https://pubs.geoscienceworld.org/gsa/geosphere/article/14/1/215/525934/Dual-tectonic-climatic-controls-on-salt-giant (2018).

Gramstad, Oddgeir, and Michael Nickel, "Automated interpretation of top and base salt using deep convolutional networks", SEG Technical Program Expanded Abstracts 2018, pp. 1956 to 1960. Society of Exploration Geophysicists. https://library.seg.org/doi/10.1190/segam2018-2996306.1 (2018).

Waldeland, Anders U., Are Charles Jensen, Leiv-J. Gelius, and Anne H. Schistad Solberg, "Convolutional neural networks for automated seismic interpretation", The Leading Edge (Society of Exploration Geophysicists Tulsa, Oklahoma) 37: pp. 529 to 537. https://library.seg.org/doi/10.1190/tle37070529.1 (2018).

Sen, Satyakee, Sribharath Kainkaryam, Cen Ong, and Arvind Sharma, "Regularization strategies for deep-learning-based salt model building", Interpretation (Society of Exploration Geophysicists and American Association of Petroleum) 7: T911 to T922. https://library.seg.org/doi/10.1190/INT-2018-0229.1 (2019).

Zeng, Yu, Kebei Jiang, and Jie Chen, "Automatic seismic salt interpretation with deep convolutional neural networks", Proceedings of the 2019 3rd International Conference on Information System and Data Mining. 16-20. https://arxiv.org/abs/1812.01101 (2019).

Shi, Yunzhi, Xinming Wu, and Sergey Fomel, "SaltSeg: Automatic 3D salt segmentation using a deep convolutional neural network", Interpretation (Society of Exploration Geophysicists and American Association of Petroleum) 7: SE113 to SE122. https://library.seg.org/doi/10.1190/INT-2018-0235.1 (2019).

Zhao, Tao, and Xiaoli Chen, "Enrich the interpretation of seismic image segmentation by estimating epistemic uncertainty", SEG Technical Program Expanded Abstracts 2020, pp. 1444- to 1448. Society of Exploration Geophysicists. https://library.seg.org/doi/abs/10.1190/segam2020-3424987.1 (2020).

Zhou, Hongbo, Sheng Xu, Gentiana Ionescu, Marin Laomana, and Nathan Weber, "Salt interpretation with U-SaltNet." SEG Technical Program Expanded Abstracts 2020, 1434-1438. Society of Exploration Geophysicists. https://library.seg.org/doi/10.1190/segam2020-3423283.1 (2020).

Li, Hongyan, Jarrod Hutson, Brian Weir, Chuck Peng, and Betty Koechner, "Statistical inversion of variable salt velocity by neural network classification in the central Gulf of Mexico", SEG Technical Program Expanded Abstracts 2016, 5323-5327. Society of Exploration Geophysicists. https://library.seg.org/doi/10.1190/segam2016-13969828.1 (2016).

Lewis, Winston, and Denes Vigh, "Deep learning prior models from seismic images for full-waveform inversion", SEG Technical Program Expanded Abstracts 2017, 1512-1517. Society of Exploration Geophysicists. https://library.seg.org/doi/abs/10.1190/segam2017-17627643.1 (2017).

Wu, Yulang, and George A. McMechan, "Feature-capturing full waveform inversion using a convolutional neural network", SEG Technical Program Expanded Abstracts 2018, 2061-2065. Society of Exploration Geophysicists. https://library.seg.org/doi/abs/10.1190/segam2018-2963265.1 (2018).

Farabet, Clement, Camille Couprie, Laurent Najman, and Yann LeCun, "Learning hierarchical features for scene labeling", IEEE transactions on pattern analysis and machine intelligence (IEEE) 35: 1915-1929. https://ieeexplore.ieee.org/abstract/document/6338939/ (2012).

Johnson, Justin, Alexandre Alahi, and Li Fei-Fei, "Perceptual losses for real-time style transfer and super-resolution", European conference on computer vision. 694-711. https://link.springer.com/chapter/10.1007/978-3-319-46475-6_43 (2016).

Kaur, Harpreet, Nam Pham, and Sergey Fomel, "Estimating the inverse Hessian for amplitude correction of migrated images using deep learning", SEG Technical Program Expanded Abstracts 2019, 2278-2282. Society of Exploration Geophysicists. https://library.seg.org/doi/abs/10.1190/segam2019-3207296.1 (2019).

He, Kaiming, Xiangyu Zhang, Shaoqing Ren, and Jian Sun, "Deep residual learning for image recognition", Proceedings of the IEEE conference on computer vision and pattern recognition. 770-778. https://openaccess.thecvf.com/content_cvpr_2016/html/He_Deep_Residual_Learning_CVPR_2016_paper.html (2016).

## Claims

1. A computer-implemented method for performing machine learning to generate and use a salt feature model (100), the method comprising:

   accessing input values and corresponding output values for a salt feature label and at least another feature label (210),
   performing machine learning in order to train the salt feature model using the input values and the output values (220),
   the machine learning including mapping the input values to a plurality of target output values, the plurality of target output values comprising a salt feature output and at least another feature output, the salt feature model being trained based on both errors between the salt feature output and the salt feature label and between the at least another feature output and the at least another feature label (230); and
   using the salt feature model for detecting subsurface hydrocarbon presence and geological features.

2. The method of claim 1, wherein the at least another feature output comprises at least one of: top of salt feature output; bottom of salt feature output; p-wave feature output; or reconstructed seismic image feature output.

3. The method of claim 1 or 2, wherein the at least another feature output comprises at least two of: top of salt feature output; bottom of salt feature output; p-wave feature output; or reconstructed seismic image feature output, optionally wherein the at least another feature output is selected based on an amount of data for the at least another feature label.

4. The method of any one of claims 1 to 3, wherein the salt feature label comprises a salt mask label;

   wherein the salt feature model comprises a salt mask model;

wherein the salt feature output comprises a salt mask output;
wherein the at least another feature label comprises one or both of top of salt label and bottom of salt label;
wherein the at least another feature output comprises one or both of top of salt output and bottom of salt output; and
wherein the errors between one or both of the top of salt output and the top of salt label and the bottom of salt output and the bottom of salt label are used to train the salt mask model.

5. The method of any one of claims 1 to 4, wherein the salt feature label comprises a salt mask label;

wherein the salt feature model comprises a salt mask model;
wherein the salt feature output comprises a salt mask output;
wherein the at least another feature label comprises top of salt label and bottom of salt label;
wherein the at least another feature output comprises top of salt output and bottom of salt output; and
wherein the errors between the top of salt output and the top of salt label and the bottom of salt output and the bottom of salt label are used to train the salt mask model.

6. The method of any one of claims 1 to 5, wherein the at least another feature output comprises a non-salt feature output, optionally wherein the non-salt feature output comprises a reconstructed seismic image or a wave velocity.

7. The method of claim 6, wherein the errors between the non-salt feature output and a non-salt feature label are generated based on a first error methodology and are used to train the salt feature model;

wherein the errors between the salt feature output and the salt feature label are generated based on a second error methodology and are used to train the salt feature model; and
wherein the first error methodology is different from the second error methodology.

8. The method of any one of claims 1 to 7, wherein the input values comprise a seismic image;

wherein the at least another feature output comprises a reconstructed seismic image; and
wherein the errors between the seismic image and the reconstructed seismic image are used to train the salt feature model.

9. The method of any one of claims 1 to 8, wherein the machine learning is performed by initially training the salt feature model using manually labeled training data and thereafter training the salt feature model using automatically labeled training data.

10. The method of any one of claims 1 to 9, wherein a network architecture for performing the machine learning comprises an image transformation network between the input values and the plurality of target output values and one or more secondary image transformation networks between the salt feature output and one or more other feature outputs.

11. The method of any one of claims 1 to 10, wherein the one or more secondary image transformation networks are different from the image transformation network in including fewer hidden layers, optionally

wherein the salt feature output comprises a salt mask output;
wherein the one or more other feature outputs comprises one or both of a top of salt (TOS) feature output or a bottom of salt (BOS) feature output; and
wherein the one or more secondary image transformation networks are between the salt mask output and one or both of the TOS feature output or the BOS feature output.

12. The method of claim 11, wherein the one or more secondary image transformation networks comprise:

a first lighter-weight transformation network receiving as input the salt feature output and whose output is combined with the TOS feature output to form a modified TOS feature output, which is compared with a TOS label to determine the error; and
a second lighter-weight transformation network receiving as input the salt feature output and whose output is combined with the BOS feature output to form a modified BOS feature output, which is compared with a BOS label to determine the error.

13. The method of any one of claims 1 to 12, further comprising masking the input values corresponding to data associated with one or both of the salt feature label or the another feature label.

14. The method of any one of claims 1 to 13, wherein the input values comprise a seismic image;

wherein the at least another feature output comprises: top of salt (TOS) feature output; bottom of salt (BOS) feature output; p-wave feature output; or reconstructed seismic image feature output;
wherein the salt feature output comprises salt mask output;
wherein the errors between the TOS feature output and a TOS feature label, between the BOS feature output and a BOS feature label, and between the salt mask output and a salt mask label are of a first type; and
wherein the errors between the P-wave feature output and a P-wave feature label and between the reconstructed seismic image feature output and the seismic image are of a second type different from the first type.

15. The method of claim 14, wherein the first type is binary cross-entropy (BCE) loss; and wherein the second type is mean-absolute-error (MAE).

**Patentansprüche**

1. Computerimplementiertes Verfahren zur Durchführung von maschinellem Lernen zur Erzeugung und Verwendung eines Salzmerkmalsmodells (100), wobei das Verfahren umfasst:

Zugreifen auf Eingabewerte und entsprechende Ausgabewerte für ein Salzmerkmalslabel und mindestens ein weiteres Merkmalslabel (210),
Durchführen von maschinellem Lernen, um das Salzmerkmalsmodell anhand der Eingabewerte und der Ausgabewerte (220) zu trainieren,
wobei bei dem maschinellen Lernen, die Eingabewerte einer Vielzahl von Zielausgabewerten zugeordnet werden, wobei die Vielzahl von Zielausgabewerten eine Salzmerkmalsausgabe und mindestens eine andere Merkmalsausgabe umfasst, wobei das Salzmerkmalsmodell auf der Grundlage sowohl von Fehlem zwischen der Salzmerkmalsausgabe und dem Salzmerkmalslabel als auch zwischen der mindestens anderen Merkmalsausgabe und dem mindestens anderen Merkmalslabel (230) trainiert wird; und
Verwenden des Salzmerkmalsmodells zum Aufspüren des Vorhandenseins von unterirdischen Kohlenwasserstoffen und geologischen Merkmalen.

2. Verfahren nach Anspruch 1, wobei die mindestens andere Merkmalsausgabe mindestens eines der folgenden Merkmale umfasst: Ausgabe des Salzspiegelmerkmals; Ausgabe des Salzgrundmerkmals; Ausgabe des p-Wellen-Merkmals; oder Ausgabe des rekonstruierten seismischen Bildmerkmals.

3. Verfahren nach Anspruch 1 oder 2, wobei die mindestens andere Merkmalsausgabe mindestens zwei der folgenden Merkmale umfasst: Ausgabe des Salzspiegelmerkmals; Ausgabe des Salzgrundmerkmals; Ausgabe des p-Wellen-Merkmals; oder Ausgabe des rekonstruierten seismischen Bildmerkmals, wobei die mindestens andere Merkmalsausgabe optional auf der Grundlage einer Datenmenge für die mindestens andere Merkmalsbezeichnung ausgewählt wird.

4. Verfahren nach einem der Ansprüche 1 bis 3, wobei das Salzmerkmalslabel ein Salzmaskenlabel umfasst;

wobei das Salzmerkmalsmodell ein Salzmaskenlabel umfasst;
wobei die Ausgabe des Salzmerkmals eine Ausgabe der Salzmaske umfasst;
wobei das mindestens eine weitere Merkmalslabel eines oder beide der folgenden Merkmale umfasst: Salzspiegellabel und Salzgrundlabel;
wobei die mindestens andere Merkmalsausgabe eine oder beide der Salzspiegelausgabe und Salzgrundausgabe umfasst; und
wobei die Fehler zwischen einem oder beiden der Salzspiegelausgabe und Salzgrundausgabe, und dem Salzgrundlabel zum Trainieren des Salzmaskenmodells verwendet werden.

5. Verfahren nach einem der Ansprüche 1 bis 4, wobei das Salzmerkmalslabel ein Salzmaskenlabel umfasst;

wobei das Salzmerkmalsmodell ein Salzmaskenmodell umfasst;

wobei die Ausgabe des Salzmerkmals eine Ausgabe der Salzmaske umfasst;
wobei das mindestens andere Merkmalslabel das Salzspiegellabel und Salzgrundlabel umfasst;
wobei die mindestens andere Merkmalsausgabe die Salzspiegel-Ausgabe und Salzgrund-Ausgabe umfasst; und
wobei die Fehler zwischen der Salzspiegel-Ausgabe und Salzgrund-Ausgabe und Salzspiegellabel und Salzgrundlabel verwendet werden, um das Salzmaskenmodell zu trainieren.

6. Verfahren nach einem der Ansprüche 1 bis 5, wobei die mindestens andere Merkmalsausgabe eine Nicht-Salzmerkmalsausgabe umfasst, wobei die Nicht-Salzmerkmalsausgabe optional ein rekonstruiertes seismisches Bild oder eine Wellengeschwindigkeit umfasst.

7. Verfahren nach Anspruch 6, wobei die Fehler zwischen der Ausgabe des Nicht-Salzmerkmals und einem Nicht-Salzmerkmalslabel auf der Grundlage einer ersten Fehlermethodik erzeugt und zum Trainieren des Salzmerkmalmodells verwendet werden;

wobei die Fehler zwischen der Salzmerkmalausgabe und dem Salzmerkmalslabel auf der Grundlage einer zweiten Fehlermethodik erzeugt und zum Trainieren des Salzmerkmalsmodells verwendet werden; und
wobei sich die erste Fehlermethodik von der zweiten Fehlermethodik unterscheidet.

8. Verfahren nach einem der Ansprüche 1 bis 7, wobei die Eingangswerte ein seismisches Bild umfassen;

wobei die mindestens andere Merkmalsausgabe ein rekonstruiertes seismisches Bild umfasst; und
wobei die Fehler zwischen dem seismischen Bild und dem rekonstruierten seismischen Bild zum Trainieren des Salzmerkmalsmodells verwendet werden.

9. Verfahren nach einem der Ansprüche 1 bis 8, wobei das maschinelle Lernen durch anfängliches Trainieren des Salzmerkmalsmodells unter Verwendung von manuell gekennzeichneten Trainingsdaten und danach durch Trainieren des Salzmerkmalsmodells unter Verwendung automatisch gekennzeichneter Trainingsdaten durchgeführt wird.

10. Verfahren nach einem der Ansprüche 1 bis 9, wobei eine Netzwerkarchitektur zur Durchführung des maschinellen Lernens ein Bildtransformationsnetzwerk zwischen den Eingabewerten und der Vielzahl von Zielausgabewerten und ein oder mehrere sekundäre Bildtransformationsnetzwerke zwischen der Salzmerkmalausgabe und einer oder mehreren anderen Merkmalausgaben umfasst.

11. Verfahren nach einem der Ansprüche 1 bis 10, wobei sich das eine oder die mehreren sekundären Bildtransformationsnetzwerke von dem Bildtransformationsnetzwerk dadurch unterscheiden, dass sie weniger versteckte Schichten enthalten, und gegebenenfalls

wobei die Salzmerkmalausgabe eine Salzmaskenausgabe umfasst;
wobei der eine oder die mehreren anderen Merkmalsausgaben einen oder beide von einer Salzspiegel-(TOS)-Merkmalsausgabe oder einer Salzgrund-(BOS)-Merkmals-ausgabe umfassen; und
wobei das eine oder die mehreren sekundären Bildtransformationsnetzwerke zwischen der Salzmaskenausgabe und der TOS-Merkmalsausgabe oder der BOS-Merkmalsausgabe oder beiden liegen.

12. Verfahren nach Anspruch 11, wobei das eine oder mehrere der sekundären Bildtransformationensnetzwerke umfassen:

ein erstes, leichter gewichtetes Transformationsnetzwerk, das als Eingabe die Salzmerkmalsausgabe empfängt und dessen Ausgabe mit der TOS-Merkmalsausgabe kombiniert wird, um eine modifizierte TOS-Merkmalsausgabe zu erzeugen, die mit einem TOS-Label verglichen wird, um den Fehler zu bestimmen; und
ein zweites, leichter gewichtetes Transformationsnetzwerk, das als Eingabe die Ausgabe Salzmerkmalsausgabe empfängt und dessen Ausgabe mit der BOS-Merkmalsausgabe kombiniert wird, um eine modifizierte BOS-Merkmalsausgabe zu erzeugen, die mit einem BOS-Label verglichen wird, um den Fehler zu bestimmen.

13. Verfahren nach einem der Ansprüche 1 bis 12, weiterhin umfassend das Maskieren der Eingabewerte, die Daten entsprechen, die mit dem Salzmerkmalslabel oder dem anderen Merkmalslabel oder mit beiden verknüpft sind.

**14.** Verfahren nach einem der Ansprüche 1 bis 13, wobei die Eingangswerte ein seismisches Bild umfassen;

wobei die mindestens andere Merkmalsausgabe die Salzspiegel-(TOS)-Merkmalsausgabe, die Salzgrund-(BOS)-Merkmalsausgabe, die p-Wellen-Merkmalsausgabe oder die rekonstruierte seismische Bildmerkmalsausgabe umfasst;
wobei die Salzmerkmalsausgabe die Salzmaskenausgabe umfasst;
wobei die Fehler zwischen der TOS-Merkmalsausgabe und einem TOS-Merkmalslabel, zwischen der BOS-Merkmal-Ausgabe und einem BOS-Merkmalslabel und zwischen der Salzmaskenausgabe und einem Salzmaskenlabel vom ersten Typ sind; und
wobei die Fehler zwischen der p-Wellen-Merkmalsausgabe und einem p-Wellen-Merkmalslabel und zwischen der rekonstruierten seismischen Bildmerkmalsausgabe und dem seismischen Bild von einem zweiten Typ sind, der sich vom ersten Typ unterscheidet.

**15.** Verfahren nach Anspruch 14, wobei der erste Typ ein binärer Kreuzentropieverlust (BCE) und der zweite Typ ein mittlerer absoluter Fehler (MAE) ist.

**Revendications**

**1.** Procédé mis en œuvre par ordinateur pour réaliser un apprentissage automatique afin de générer et d'utiliser un modèle de caractéristiques salines (100), le procédé comprenant :

l'accès à des valeurs d'entrée et des valeurs de sortie correspondantes pour une étiquette de caractéristique saline et au moins une autre étiquette de caractéristique (210),
la réalisation d'un apprentissage automatique afin d'entraîner le modèle de caractéristiques salines au moyen des valeurs d'entrée et des valeurs de sortie (220),
l'apprentissage automatique comportant le mappage des valeurs d'entrée sur une pluralité de valeurs de sortie cibles, la pluralité de valeurs de sortie cibles comprenant une sortie de caractéristique saline et au moins une autre sortie de caractéristique, le modèle de caractéristiques salines étant entraîné sur la base d'erreurs à la fois entre la sortie de caractéristique saline et l'étiquette de caractéristique saline et entre l'au moins une autre sortie de caractéristique et l'au moins une autre étiquette de caractéristique (230) ; et
l'utilisation du modèle de caractéristiques salines pour la détection de la présence souterraine d'hydrocarbures et de caractéristiques géologiques.

**2.** Procédé selon la revendication 1, dans lequel l'au moins une autre sortie de caractéristique comprend au moins un des éléments suivants : sortie de caractéristique de haut de sel ; sortie de caractéristique de bas de sel ; sortie de caractéristique d'onde p ; ou sortie de caractéristique d'image sismique reconstruite.

**3.** Procédé selon la revendication 1 ou 2, dans lequel l'au moins une autre sortie de caractéristique comprend au moins deux des éléments suivants : sortie de caractéristique de haut de sel ; sortie de caractéristique de bas de sel ; sortie de caractéristique d'onde p ; ou sortie de caractéristique d'image sismique reconstruite, éventuellement dans lequel l'au moins une autre sortie de caractéristique est choisie sur la base d'une quantité de données pour l'au moins une autre étiquette de caractéristique.

**4.** Procédé selon l'une quelconque des revendications 1 à 3, dans lequel l'étiquette de caractéristique saline comprend une étiquette de masque salin ;

dans lequel le modèle de caractéristiques salines comprend un modèle de masque salin ;
dans lequel la sortie de caractéristique saline comprend une sortie de masque salin ;
dans lequel l'au moins une autre étiquette de caractéristique comprend une étiquette de haut de sel et/ou une étiquette de bas de sel ;
dans lequel l'au moins une autre sortie de caractéristique comprend une sortie de haut de sel et/ou une sortie de bas de sel ; et
dans lequel les erreurs entre la sortie de haut de sel et l'étiquette de haut de sel et/ou la sortie de bas de sel et l'étiquette de bas de sel sont utilisées pour entraîner le modèle de masque salin.

**5.** Procédé selon l'une quelconque des revendications 1 à 4, dans lequel l'étiquette de caractéristique saline comprend une étiquette de masque salin ;

dans lequel le modèle de caractéristiques salines comprend un modèle de masque salin ;

dans lequel la sortie de caractéristique saline comprend une sortie de masque salin ;

dans lequel l'au moins une autre étiquette de caractéristique comprend une étiquette de haut de sel et une étiquette de bas de sel ;

dans lequel l'au moins une autre sortie de caractéristique comprend une sortie de haut de sel et une sortie de bas de sel ; et

dans lequel les erreurs entre la sortie de haut de sel et l'étiquette de haut de sel et la sortie de bas de sel et l'étiquette de bas de sel sont utilisées pour entraîner le modèle de masque salin.

6. Procédé selon l'une quelconque des revendications 1 à 5, dans lequel l'au moins une autre sortie de caractéristique comprend une sortie de caractéristique non saline, éventuellement dans lequel la sortie de caractéristique non saline comprend une image sismique reconstruite ou une vitesse d'onde.

7. Procédé selon la revendication 6, dans lequel les erreurs entre la sortie de caractéristique non saline et une étiquette de caractéristique non saline sont générées sur la base d'une première méthodologie d'erreur et sont utilisées pour entraîner le modèle de caractéristiques salines ;

dans lequel les erreurs entre la sortie de caractéristique saline et l'étiquette de caractéristique saline sont générées sur la base d'une deuxième méthodologie d'erreur et sont utilisées pour entraîner le modèle de caractéristiques salines ; et

dans lequel la première méthodologie d'erreur est différente de la deuxième méthodologie d'erreur.

8. Procédé selon l'une quelconque des revendications 1 à 7, dans lequel les valeurs d'entrée comprennent une image sismique ;

dans lequel l'au moins une autre sortie de caractéristique comprend une image sismique reconstruite ; et

dans lequel les erreurs entre l'image sismique et l'image sismique reconstruite sont utilisées pour entraîner le modèle de caractéristiques salines.

9. Procédé selon l'une quelconque des revendications 1 à 8, dans lequel l'apprentissage automatique est réalisé par entraînement initial du modèle de caractéristiques salines au moyen de données d'entraînement étiquetées manuellement puis entraînement du modèle de caractéristiques salines au moyen de données d'entraînement étiquetées automatiquement.

10. Procédé selon l'une quelconque des revendications 1 à 9, dans lequel une architecture de réseau destinée à réaliser l'apprentissage automatique comprend un réseau de transformation d'image entre les valeurs d'entrée et la pluralité de valeurs de sortie cibles et un ou plusieurs réseaux de transformation d'image secondaires entre la sortie de caractéristique saline et une ou plusieurs autres sorties de caractéristique.

11. Procédé selon l'une quelconque des revendications 1 à 10, dans lequel le ou les réseaux de transformation d'image secondaires sont différents du réseau de transformation d'image en ce qu'ils comportent moins de couches cachées, éventuellement

dans lequel la sortie de caractéristique saline comprend une sortie de masque salin ;

dans lequel la ou les autres sorties de caractéristique comprennent une sortie de caractéristique de haut de sel (TOS) et/ou une sortie de caractéristique de bas de sel (BOS) ; et

dans lequel le ou les réseaux de transformation d'image secondaires se situent entre la sortie de masque salin, et la sortie de caractéristique TOS et/ou la sortie de caractéristique BOS.

12. Procédé selon la revendication 11, dans lequel le ou les réseaux de transformation d'image secondaires comprennent :

un premier réseau de transformation de poids plus léger recevant comme entrée la sortie de caractéristique saline et dont la sortie est combinée avec la sortie de caractéristique TOS pour former une sortie de caractéristique TOS modifiée, qui est comparée à une étiquette TOS pour déterminer l'erreur ; et

un deuxième réseau de transformation de poids plus léger recevant comme entrée la sortie de caractéristique saline et dont la sortie est combinée avec la sortie de caractéristique BOS pour former une sortie de caractéristique BOS modifiée, qui est comparée à une étiquette BOS pour déterminer l'erreur.

**13.** Procédé selon l'une quelconque des revendications 1 à 12, comprenant en outre le masquage des valeurs d'entrée correspondant à des données associées à l'étiquette de caractéristique saline et/ou l'autre étiquette de caractéristique.

**14.** Procédé selon l'une quelconque des revendications 1 à 13, dans lequel les valeurs d'entrée comprennent une image sismique ;

dans lequel l'au moins une autre sortie de caractéristique comprend : une sortie de caractéristique de haut de sel (TOS) ; une sortie de caractéristique de bas de sel (BOS) ; une sortie de caractéristique d'onde p ; ou une sortie de caractéristique d'image sismique reconstruite ;
dans lequel la sortie de caractéristique saline comprend une sortie de masque salin ;
dans lequel les erreurs entre la sortie de caractéristique TOS et une étiquette de caractéristique TOS, entre la sortie de caractéristique BOS et une étiquette de caractéristique BOS, et entre la sortie de masque salin et une étiquette de masque salin sont d'un premier type ; et
dans lequel les erreurs entre la sortie de caractéristique d'onde p et une étiquette de caractéristique d'onde p et entre la sortie de caractéristique d'image sismique reconstruite et l'image sismique sont d'un deuxième type différent du premier type.

**15.** Procédé selon la revendication 14, dans lequel le premier type est une perte d'entropie croisée binaire (BCE) ; et dans lequel le deuxième type est une erreur absolue moyenne (MAE).

FIG. 1

200

210

Accessing input values (e.g., seismic images) and corresponding output values for salt feature label and another feature label

220

Performing at least partly supervised machine learning to train the neural network

230

Use the trained neural network and input values to generate an output value for the salt feature

FIG. 2A

250

260

Accessing input values (e.g., seismic images) and corresponding output values for manually-labeled features (e.g., manual labeled salt feature and other manually-labeled feature(s)

270

Performing at least partly supervised machine learning to train the neural network using the manually-labeled features

280

Retrain the neural network using automatically labeled features

290

Use the retrained neural network and input values to generate an output value for the salt feature

FIG. 2B

| | Training labels | Aggregated loss function |
|---|---|---|
| $D_{\mathrm{ISV}}$ | Salt mask and Vp | $L_{\mathrm{ISV}}\left(x, y_{\mathrm{S}}^{\dagger}, y_{\mathrm{V}}^{\dagger}\right)$ $= L_{\mathrm{S}}^{M}\left(x, y_{\mathrm{S}}^{\dagger}\right) + L_{\mathrm{MAE}}^{M}\left(F_{\mathrm{V}}(x), y_{\mathrm{V}}^{\dagger}\right)$ $+ L_{\mathrm{MAE}}\left(F_{\mathrm{I}}(x), x\right).$ |
| $D_{\mathrm{IS}}$ | Salt mask | $L_{\mathrm{IS}}\left(x, y_{\mathrm{S}}^{\dagger}\right) = L_{\mathrm{S}}^{M}\left(x, y_{\mathrm{S}}^{\dagger}\right) + L_{\mathrm{MAE}}\left(F_{\mathrm{I}}(x), x\right).$ |
| $D_{\mathrm{IT}}$ | TOS horizon only | $L_{\mathrm{IT}}\left(x, y_{\mathrm{T}}^{\dagger}\right) = L_{\mathrm{BCE}}^{M}\left(F_{\mathrm{T}}(x), y_{\mathrm{T}}^{\dagger}\right) + L_{\mathrm{MAE}}\left(F_{\mathrm{I}}(x), x\right).$ |
| $D_{\mathrm{IB}}$ | BOS horizon only | $L_{\mathrm{IB}}\left(x, y_{\mathrm{B}}^{\dagger}\right) = L_{\mathrm{BCE}}^{M}\left(F_{\mathrm{B}}(x), y_{\mathrm{B}}^{\dagger}\right) + L_{\mathrm{MAE}}\left(F_{\mathrm{I}}(x), x\right).$ |
| $D_{\mathrm{IV}}$ | Vp model only | $L_{\mathrm{IV}}\left(x, y_{\mathrm{V}}^{\dagger}\right) = L_{\mathrm{MAE}}^{M}\left(F_{\mathrm{V}}(x), y_{\mathrm{V}}^{\dagger}\right) + L_{\mathrm{MAE}}\left(F_{\mathrm{I}}(x), x\right).$ |
| $D_{\mathrm{I}}$ | No label | $L_{\mathrm{I}}(x) = L_{\mathrm{MAE}}\left(F_{\mathrm{I}}(x), x\right).$ |

FIG. 3

FIG. 4A

FIG. 4B

FIG. 5

**FIG. 6**

FIG. 7A

FIG. 7B

EP 4 334 758 B1

FIG. 8

31

**REFERENCES CITED IN THE DESCRIPTION**

**Patent documents cited in the description**

- US 63201619 A
- US 20100186950 A1

- US 20200183035 A1

**Non-patent literature cited in the description**

- Dual tectonic-climatic controls on salt giant deposition in the Santos Basin, offshore Brazil. **RODRIGUEZ, C. R.** ; **C. A.-L. JACKSON** ; **A. ROTEVATN** ; **R. E. BELL** ; **M. FRANCIS**. Geosphere. Geological Society of America, 2018, vol. 14, 215-242
- Automated interpretation of top and base salt using deep convolutional networks. **GRAMSTAD, ODDGEIR** ; **MICHAEL NICKEL**. SEG Technical Program Expanded Abstracts 2018. Society of Exploration Geophysicists, 2018, 1956-1960
- Convolutional neural networks for automated seismic interpretation. **WALDELAND, ANDERS U.** ; **ARE CHARLES JENSEN** ; **LEIV-J. GELIUS** ; **ANNE H. SCHISTAD SOLBERG**. The Leading Edge. Society of Exploration Geophysicists, 2018, vol. 37, 529-537
- **WANG, DETAO** ; **GUOXIONG CHEN**. Seismic Stratum Segmentation Using an Encoder-Decoder Convolutional Neural Network. *Mathematical Geociences*, 2021, vol. 53, 1355-1374
- Regularization strategies for deep-learning-based salt model building. **SEN, SATYAKEE** ; **SRIBHARATH KAINKARYAM** ; **CEN ONG** ; **ARVIND SHARMA**. Interpretation. Society of Exploration Geophysicists and American Association of Petroleum, 2019, vol. 7, T911-T922
- **ZENG, YU** ; **KEBEI JIANG** ; **JIE CHEN**. Automatic seismic salt interpretation with deep convolutional neural networks. *Proceedings of the 2019 3rd International Conference on Information System and Data Mining*, 2019, 16-20, https://arxiv.org/abs/1812.01101
- SaltSeg: Automatic 3D salt segmentation using a deep convolutional neural network. **SHI, YUNZHI** ; **XINMING WU** ; **SERGEY FOMEL**. Interpretation. Society of Exploration Geophysicists and American Association of Petroleum, 2019, vol. 7, SE113-SE122
- Enrich the interpretation of seismic image segmentation by estimating epistemic uncertainty. **ZHAO, TAO** ; **XIAOLI CHEN**. SEG Technical Program Expanded Abstracts 2020. Society of Exploration Geophysicists, 2020, 1444-1448

- Salt interpretation with U-SaltNet.. **ZHOU, HONGBO** ; **SHENG XU** ; **GENTIANA IONESCU** ; **MARIN LAOMANA** ; **NATHAN WEBER**. SEG Technical Program Expanded Abstracts 2020. Society of Exploration Geophysicists, 2020, 1434-1438
- Statistical inversion of variable salt velocity by neural network classification in the central Gulf of Mexico. **LI, HONGYAN** ; **JARROD HUTSON** ; **BRIAN WEIR** ; **CHUCK PENG** ; **BETTY KOECHNER**. SEG Technical Program Expanded Abstracts 2016. Society of Exploration Geophysicists, 2016, 5323-5327
- Deep learning prior models from seismic images for full-waveform inversion. **LEWIS, WINSTON** ; **DENES VIGH**. SEG Technical Program Expanded Abstracts 2017. Society of Exploration Geophysicists, 2017, 1512-1517
- Feature-capturing full waveform inversion using a convolutional neural network. **WU, YULANG** ; **GEORGE A. MCMECHAN**. SEG Technical Program Expanded Abstracts 2018. Society of Exploration Geophysicists, 2018, 2061-2065
- **JOHNSON, JUSTIN** ; **ALEXANDRE ALAHI** ; **LI FEIFEI**. Perceptual losses for real-time style transfer and super-resolution. *European conference on computer vision.*, 2016, 694-711, https://link.springer.com/chapter/10.1007/978-3-319-46475-6_43
- Estimating the inverse Hessian for amplitude correction of migrated images using deep learning. **KAUR, HARPREET** ; **NAM PHAM** ; **SERGEY FOMEL**. SEG Technical Program Expanded Abstracts 2019. Society of Exploration Geophysicists, 2019, 2278-2282
- Learning hierarchical features for scene labeling. **FARABET, CLEMENT** ; **CAMILLE COUPRIE** ; **LAURENT NAJMAN** ; **YANN LECUN**. IEEE transactions on pattern analysis and machine intelligence. IEEE, 2012, vol. 35, 1915-1929

- **HE, KAIMING** ; **XIANGYU ZHANG** ; **SHAOQING REN** ; **JIAN SUN**. Deep residual learning for image recognition. *Proceedings of the IEEE conference on computer vision and pattern recognition.*, 2016, 770-778, https://openaccess.thecvf.com/content_cvpr_2016/html/He_Deep_Residual_Learning_CVPR _2016_paper.html
- Dual tectonic-climatic controls on salt giant deposition in the Santos Basin, offshore Brazil. **RODRIGUEZ, C. R.** ; **C. A.-L. JACKSON** ; **A. ROTEVATN** ; **R. E. BELL** ; **M. FRANCIS**. Geosphere. Geological Society of America, 2018, vol. 14, 215-242
- Automated interpretation of top and base salt using deep convolutional networks. **GRAMSTAD, ODD-GEIR** ; **MICHAEL NICKEL**. SEG Technical Program Expanded Abstracts 2018. Society of Exploration Geophysicists, 2018, 1956-1960
- Convolutional neural networks for automated seismic interpretation. **WALDELAND, ANDERS U.** ; **ARE CHARLES JENSEN** ; **LEIV-J. GELIUS** ; **ANNE H** ; **SCHISTAD SOLBERG**. The Leading Edge. Society of Exploration Geophysicists, 2018, vol. 37, 529-537
- Regularization strategies for deep-learning-based salt model building. **SEN, SATYAKEE** ; **SRIBHARATH KAINKARYAM** ; **CEN ONG** ; **ARVIND SHARMA**. Interpretation. Society of Exploration Geophysicists and American Association of Petroleum, 2019, vol. 7, T911-T922
- Automatic seismic salt interpretation with deep convolutional neural networks. **ZENG, YU** ; **KEBEI JIANG** ; **JIE CHEN**. Proceedings of the 2019 3rd International Conference on Information System and Data Mining.. 2019, 16-20